(19) Europäisches Patentamt
European Patent Office
Office européen des brevets

(11) **EP 1 816 772 A1**

(12) **EUROPEAN PATENT APPLICATION**
published in accordance with Art. 158(3) EPC

(43) Date of publication:
**08.08.2007 Bulletin 2007/32**

(51) Int Cl.:
**H04J 11/00** (2006.01)  **H04B 7/26** (2006.01)

(21) Application number: **05809656.1**

(22) Date of filing: **28.11.2005**

(86) International application number:
**PCT/JP2005/021799**

(87) International publication number:
**WO 2006/059566 (08.06.2006 Gazette 2006/23)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2004 JP 2004346512**

(71) Applicant: **Matsusita Electric Industrial Co., Ltd.**
**Kadoma-shi, Osaka 571-8501 (JP)**

(72) Inventor: **IMAMURA, Daichi**
**c/o Matsushita Electric Industrial Co., Ltd.**
**Chuo-ku, Osaka-shi, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **TRANSMISSION CONTROL FRAME GENERATION DEVICE, TRANSMISSION CONTROL FRAME PROCESSING DEVICE, TRANSMISSION CONTROL FRAME GENERATION METHOD, AND TRANSMISSION CONTROL FRAME PROCESSING METHOD**

(57) There is provided a transmission control frame generation device capable of reducing the data amount of feedback information while maintaining the quality of the feedback information. In this device, an average quality level calculation unit (182) calculates a reference line state level between sub-carriers from the line state levels corresponding to the sub-carriers. A DPCM (Differential Pulse Code Modulation) unit (184) encodes a difference value between a first line state level of a sub-carrier and a second line state level of another sub-carrier and an encoded difference value is obtained. A feedback frame generation unit (185) generates a frame indicating the reference line state level and the encoded difference value. A number-of-bits control unit (183) controls encoding of the difference value according to the relative size with respect to one of the reference line state levels: the first line state level or the second line state level.

FIG.3

**Description**

Technical Field

The present invention relates to a transmission control frame generation apparatus, a transmission control frame processing apparatus, a transmission control frame generation method and a transmission control frame processing method used in a mobile communication system of a multicarrier transmission scheme.

Background Art

In the next generation mobile communication system such as the fourth generation system, a data rate exceeding 100 Mbps is required even upon high-speed movement. In order to satisfy this requirement, various wireless communication systems using a bandwidth of approximately 100 MHz has been studied. Of these, in particular, multicarrier transmission schemes typified by an OFDM (Orthogonal Frequency Division Multiplexing) scheme have been considered as important as transmission schemes for the next generation mobile communication system from the point of view of adaptability to a frequency selective fading environment and spectrum efficiency.

As one technique studied in order to realize high throughput in the mobile communication system of the multicarrier transmission scheme, there is adaptive transmission control described below. In adaptive transmission control, a channel state is estimated for each subcarrier or each subcarrier group, and modulation parameters such as error correction performance, M-ary number, power, phase and transmission antenna are adaptively controlled for each subcarrier or each subcarrier group based on channel state information (CSI) indicating the result of this estimation. A subcarrier group is one area of the entire band used in multicarrier transmission and includes one or more subcarriers.

The configuration and operation for controlling the modulation parameters for each subcarrier group are basically the same as the configuration and operation for controlling the modulation parameters for each subcarrier. To simplify the description, only modulation parameter control for each subcarrier will be described in the following description. Modulation parameter control for each subcarrier group is implemented by appropriately substituting "subcarrier group" for "subcarrier".

There is a closed loop type in adaptive transmission control. Namely, an apparatus that receives information transmitted using subcarriers which are control targets feeds back a CSI value of the subcarriers. On the other hand, an apparatus that transmits information using subcarriers which are control targets, receives the feedback information, and adaptively controls the modulation parameters for the subcarriers based on this information.

Various methods have been proposed for handling an increase in feedback information overhead which is accompanied by an increase in the number of subcarriers for a closed-loop adaptive transmission control.

For example, in the conventional adaptive transmission control described in Non-patent Document 1, compressed feedback information is generated by encoding the difference between the CSI value fed back at a given time and the immediately subsequent CSI value for each subcarrier in time domain.

In another example of the conventional adaptive transmission control, compressed feedback information is generated by encoding the difference between the CSI values of two consecutive subcarriers in the frequency domain.

The technique of encoding the difference between samples utilizing the high correlation between successive samples is generally referred to as differential coding. Differential coding has been long established in a field such as speech coding. Examples of differential coding schemes include DPCM (Differential Pulse Code Modulation), DM (Delta Modulation), ADPCM (Adaptive Differential Pulse Code Modulation) and ADM (Adaptive Delta Modulation) (see Non-patent Documents 2 and 3, for example).

Non-patent Document 1: Hynsoo Cheon, Byungjoon Part, Daesik Hong, "Adaptive Multicarrier System with Reduced Feedback Information in Wideband Radio Channels," Vehicular Technology Conference, 1999. VTC 1999-Fall, IEEE VTS 50th, Vol. 5, pp. 2880-2884, 19-22 September 1999.

Non-patent Document 2: Kazuo Tanaka, "Digital Information Compression <Fundamental Techniques of the INC/ VANEra>," August 30, 1984.

Non-patent Document 3: "Information Source Coding; Distorted Data Compression," Society of Information Theory and its Applications ed., Information Theory and its Applications Series 1-II, September 8, 2000.

Disclosure of Invention

Problems to Be Solved by the Invention

However, the above-described data compression technique using existing differential coding is originally proposed assuming voice or image as target information source. If the existing differential coding is only introduced while feedback information is generated from the CSI value of each subcarrier, there is a certain limit to the reduction of the amount of data of the feedback information.

In order to maintain an adequate practical level of throughput in the multicarrier transmission, it is required to maintain the quality of the feedback information at a certain level or above.

It is therefore an object of the present invention to provide a transmission control frame generation apparatus, a transmission control frame processing apparatus, a transmission control frame generation method and a transmission control frame processing method capable of maintaining the quality of the feedback information and reducing the amount of data of the feedback information.

Means for Solving the Problem

The transmission control frame generation apparatus of the present invention has: a reference level calculation section that calculates a reference channel state level among a plurality of subcarriers from a plurality of channel state levels that respectively correspond to the plurality of subcarriers; an encoding section that encodes a difference value between a first channel state level and a second channel state level that correspond to one subcarrier and another subcarrier, respectively, out of the plurality of subcarriers, and obtains an encoded difference value; a generation section that generates a frame indicating the reference channel state level and the encoded difference value; and an encoding control section that controls the encoding of the difference value based on a relative size of either one of the first channel state level and the second channel state level with respect to the reference channel state level.

The transmission control frame processing apparatus of the present invention has: an acquisition section that acquires a frame indicating a reference channel state level among a plurality of subcarriers, and further indicating a difference value between a first channel state level and a second channel state level that correspond to one subcarrier and another subcarrier, respectively, out of the plurality of subcarriers; a decoding section that decodes the difference value and obtains a decoded difference value; an individual level calculation section that calculates either one of the first channel state level and the second channel state level using the decoded difference value; and a decoding control section that controls the decoding of the difference value based on a relative size of either one of the first channel state level and the second channel state level with respect to the reference channel state level.

The transmission control frame generation method of the present invention has: a reference level calculation step of calculating a reference channel state level among a plurality of subcarriers from a plurality of channel state levels that respectively correspond to the plurality of subcarriers; an encoding step of encoding a difference value between a first channel state level and a second channel state level that correspond to one subcarrier and another subcarrier, respectively, out of the plurality of subcarriers, and obtaining an encoded difference value; a generation step of generating a frame indicating the reference channel state level and the encoded difference value; and an encoding control step of controlling the encoding of the difference value based on a relative size of either one of the first channel state level and the second channel state level with respect to the reference channel state level.

The transmission control frame processing method of the present invention has: an acquisition step of acquiring a frame indicating a reference channel state level among a plurality of subcarriers, and further indicating a difference value between a first channel state level and a second channel state level that correspond to one subcarrier and another subcarrier, respectively, out of the plurality of subcarriers; a decoding step of decoding the difference value and obtaining a decoded difference value; an individual level calculation step of calculating either one of the first channel state level and the second channel state level using the decoded difference value; and a decoding control step of controlling the decoding of the difference value based on a relative size of either one of the first channel state level and the second channel state level with respect to the reference channel state level. Advantageous Effect of the Invention

According to the present invention, it is possible to maintain the quality of the feedback information and reduce the amount of data of the feedback information.

Brief Description of Drawings

FIG.1 is a block diagram showing the configuration of a transmission apparatus according to Embodiment 1 of the present invention;

FIG.2 is a block diagram showing the configuration of a reception apparatus according to Embodiment 1 of the present invention;

FIG.3 is a block diagram showing the configuration of a CSI frame generation section according to Embodiment 1 of the present invention;

FIG.4 is a flowchart showing an example of the operation performed in the CSI frame generation section according to Embodiment 1 of the present invention;

FIG.5 shows an example of the configuration of the OFDM frame, the transmission channel response estimation timing, and the frequency response estimation value according to Embodiment 1 of the present invention;

FIG.6 illustrates step widths according to Embodiment 1 of the present invention;

FIG.7 shows an example of the SNR values of the subcarriers according to Embodiment 1 of the present invention;

FIG.8 8 shows an example of the waveform of the SNR values and frequency characteristics of the subcarriers according to Embodiment 1 of the present invention;

FIG.9 shows the difference SNR values or SNR values of the subcarriers and the required number of bits thereof according to Embodiment 1 of the present invention;

FIG.10 shows the number of bits corresponding to the result of comparing the SNR value and the threshold value according to Embodiment 1 of the present invention;

FIG.11 shows the statistical relationship between the difference SNR value and the SNR value versus average SNR value;

FIG.12 shows the number of bits allocated to the difference SNR value or SNR value of the subcarriers according to Embodiment 1 of the present invention;

FIG.13 shows a first example of the CSI frame according to Embodiment 1 of the present invention;

FIG.14 shows a second example of the CSI frame according to Embodiment 2 of the present invention;

FIG.15 shows a third example of the CSI frame according to Embodiment 3 of the present invention;

FIG.16 shows a fourth example of the CSI frame according to Embodiment 4 of the present invention;

FIG.17 shows a CSI frame that has the frame format of FIG. 10 and is generated using the SNR value or difference SNR value encoded at the number of bits shown in FIG.12;

FIG.18 is a block diagram showing the configuration of a CSI frame processing section according to Embodiment 1 of the present invention;

FIG.19 is a flowchart showing an example of the operation performed in the CSI frame processing section according to Embodiment 1 of the present invention;

FIG.20 is a block diagram showing the configuration of the CSI frame generation section according to Embodiment 2 of the present invention;

FIG.21 is a flowchart showing an example of the operation performed in the CSI frame generation section according to Embodiment 2 of the present invention;

FIG.22 shows the step width corresponding to the result of comparing the SNR value and the threshold value according to Embodiment 2 of the present invention;

FIG.23 shows the set step width and the number of bits allocated to the difference SNR value or SNR value of the subcarriers according to Embodiment 2 of the present invention;

FIG.24 is a block diagram showing the configuration of the CSI frame processing section according to Embodiment 2 of the present invention;

FIG.25 is a flowchart showing an example of the operation performed in the CSI frame processing section according to Embodiment 2 of the present invention;

FIG.26 is a block diagram showing the configuration of the CSI frame generation section according to Embodiment 3 of the present invention;

FIG.27 illustrates an example of the delay spread estimation method according to Embodiment 3 of the present invention;

FIG.28 shows the statistical relationship between the delay spread and the difference SNR value;

FIG.29 illustrates another example of the delay spread estimation method according to Embodiment 3 of the present invention;

FIG.30 shows a table for acquiring the delay spread estimation value according to Embodiment 3 of the present invention;

FIG.31 illustrates the switching of table settings according to Embodiment 3 of the present invention;

FIG.32 shows the offset values corresponding to the delay spread estimation values according to Embodiment 3 of the present invention;

FIG.33 shows the number of bits corresponding to the result of comparing the SNR value and the threshold value according to Embodiment 3 of the present invention;

FIG.34 shows a first example of the CSI frame according to Embodiment 3 of the present invention;

FIG.35 shows a second example of the CSI frame according to Embodiment 3 of the present invention;

FIG.36 shows a third example of the CSI frame according to Embodiment 3 of the present invention;

FIG.37 shows a fourth example of the CSI frame according to Embodiment 3 of the present invention;

FIG.38 is a block diagram showing the configuration of the CSI frame processing section according to Embodiment 3 of the present invention;

FIG.39 is a block diagram showing the configuration of the CSI frame generation section according to Embodiment 4 of the present invention;

FIG.40 illustrates the switching of table settings according to Embodiment 4 of the present invention;

FIG.41 shows the offset values corresponding to the delay spread estimation values according to Embodiment 4 of the present invention;

FIG.42 shows the step width corresponding to the result of comparing the SNR value and the threshold value according to Embodiment 4 of the present invention; and

FIG.43 is a block diagram showing the configuration of the CSI frame processing section according to Embodiment 4 of the present invention.

Best Scheme for Carrying Out the Invention

Embodiments of the present invention will be described in detail below with reference to the accompanying drawings.

(Embodiment 1)

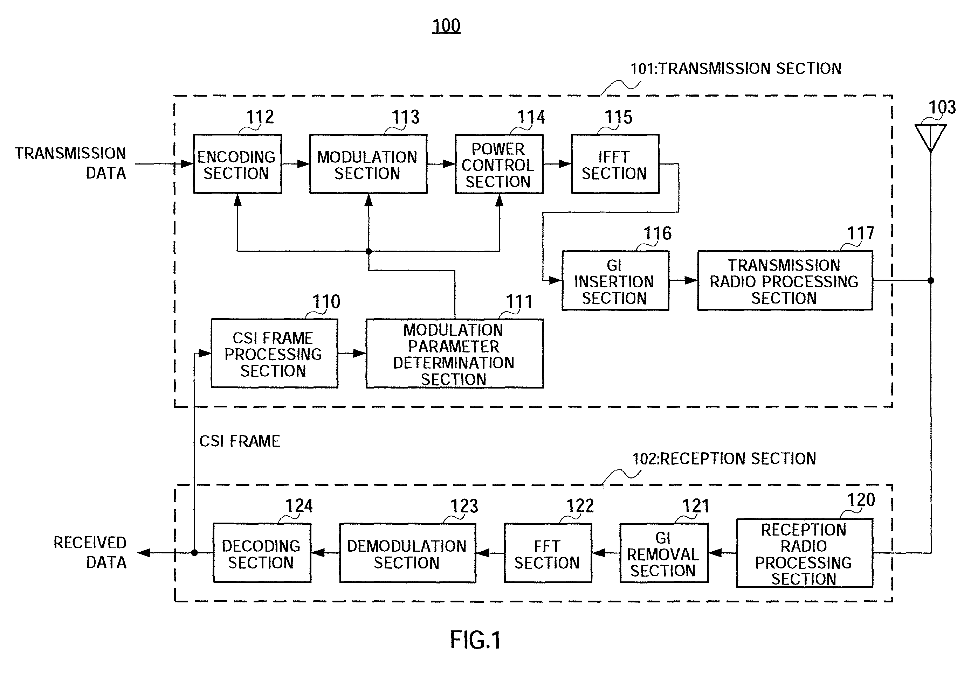

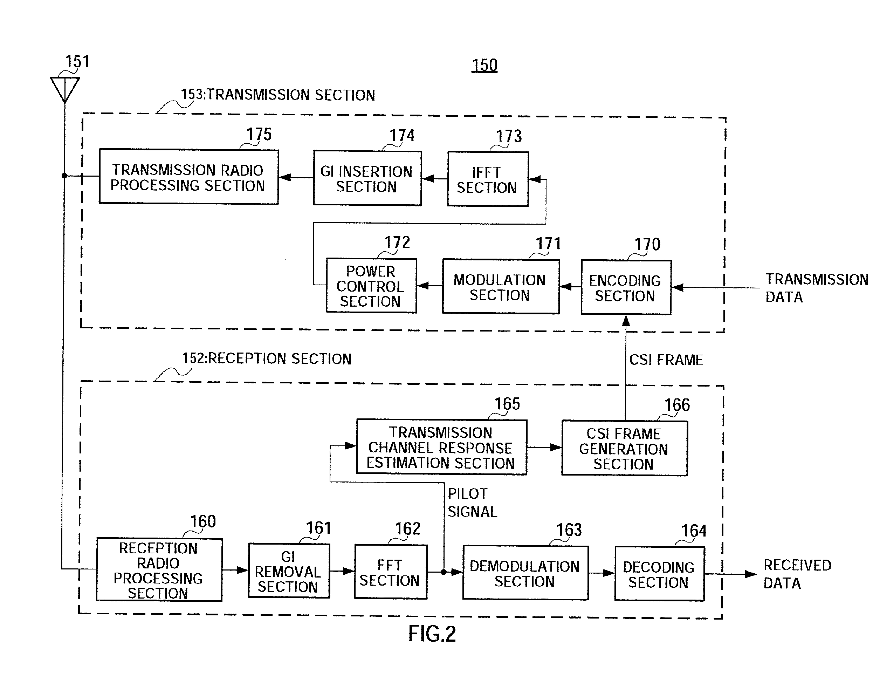

FIG.1 is a block diagram showing the configuration of a radio communication apparatus provided with the transmission control frame processing apparatus according to Embodiment 1 of the present invention. FIG.2 is a block diagram showing the configuration of a radio reception apparatus provided with the transmission control frame generation apparatus according to Embodiment 1 of the present invention. The radio communication apparatus provided with the transmission control frame processing apparatus is an apparatus for transmitting information (information data sequence) in subcarriers which are control targets, and is therefore referred to hereinafter as "transmission apparatus." The radio communication apparatus provided with the transmission control frame generation apparatus is an apparatus for receiving information (information data stream) transmitted in subcarriers which are control targets, and is therefore referred to hereinafter as "reception apparatus." Transmission apparatus 100 of FIG.1 and reception apparatus 150 of FIG.2 are provided to a base station apparatus or communication terminal apparatus used in a mobile communication system. The base station apparatus is sometimes referred to as Node B, the communication terminal apparatus as UE, and the subcarrier as Tone.

Transmission apparatus 100 has transmission section 101, reception section 102 and antenna 103. Transmission section 101 has CSI frame processing section 110, modulation parameter determination section 111, encoding section 112, modulation section 113, power control section 114, IFFT (Inverse Fast Fourier Transform) section 115, GI (Guard Interval) insertion section 116 and transmission radio processing section 117. Reception section 102 has reception radio processing section 120, GI removal section 121, FFT (Fast Fourier Transform) section 122, demodulation section 123 and decoding section 124.

CSI frame processing section 110 as the CSI frame processing apparatus obtains channel state information (hereinafter referred to as CSI) for each subcarrier from a CSI frame obtained by the decoding processing at decoding section 124. The configuration and operation of CSI frame processing section 110 will be described in detail later. The CSI is sometimes indicated as a CQI (Channel Quality Indicator).

Modulation parameter determination section 111 determines the modulation parameters (channel coding scheme, coding rate, modulation scheme and transmission power) of each subcarrier based on the CSI of each subcarrier inputted from CSI frame processing section 110. Specifically, transmission by the subcarriers is controlled using the determined channel coding scheme, coding rate, modulation scheme and transmission power.

Encoding section 112 encodes inputted time-series transmission data for each subcarrier according to the channel coding scheme and coding rate indicated from modulation parameter determination section 111. Modulation section 113 modulates the encoded transmission data for each subcarrier according to the modulation scheme (for example, M-PSK and M-QAM) indicated from modulation parameter determination section 111. Power control section 114 sets the transmission power of each subcarrier to the transmission power value indicated from modulation parameter determination section 111. IFFT section 115 performs IFFT processing for multiplexing the modulated signal of each subcarrier with a plurality of orthogonal subcarriers, and generates OFDM symbols that are multicarrier signals. GI insertion section 116 inserts a GI between OFDM symbols in order to reduce Inter Symbol Interference (ISI) due to a delayed wave.

Transmission radio processing section 117 performs predetermined radio processing such as up-conversion on the OFDM symbols, and transmits the OFDM symbols after radio processing from antenna 103 to reception apparatus 150. Specifically, a transmission data sequence that is superimposed on the subcarriers is radio transmitted.

Reception radio processing section 120 performs predetermined radio processing such as down-conversion on the OFDM symbols received by antenna 103. The received OFDM symbols include a framed CSI (CSI frame). Specifically, reception radio processing section 120 receives a CSI frame.

GI removal section 121 removes the GI inserted between OFDM symbols. FFT section 122 performs FFT processing on the OFDM symbols fromwhichthe GI is removed, and obtains the signal of each subcarrier. Demodulation section 123 demodulates the signal after FFT processing, and decoding section 124 decodes the modulated signal. Received data are thereby obtained. The received data includes a data frame and a CSI frame.

Reception apparatus 150 shown in FIG. 2 has antenna 151, reception section 152 and transmission section 153. Reception section 152 has reception radio processing section 160, GI removal section 161, FFT section 162, demodulation section 163, decoding section 164, transmission channel response estimation section 165 and CSI frame generation section 166. Transmission section 153 has encoding section 170, modulation section 171, power control section 172, IFFT section 173, GI insertion section 174 and transmission radio processing section 175.

Reception radio processing section 160 performs predetermined radio processing such as down-conversion on the OFDM symbols received at antenna 151 . Specifically, reception radio processing section 160 receives the data sequence superimposed on the subcarriers.

GI removal section 161 removes the GI inserted between OFDM symbols. FFT section 162 performs FFT processing on the OFDM symbols fromwhich the GI is removed, and obtains the signal of each subcarrier. Among the signals after FFT processing, an information signal from which a pilot signal or the like is removed is inputted to demodulation section 163. Demodulation section 163 demodulates the information signal using a demodulation scheme corresponding to the modulation scheme used for modulation in transmission apparatus 100. Decoding section 164 performs decoding processing such as error correction on the signal modulated using a decoding scheme corresponding to the encoding scheme used for encoding in transmission apparatus 100, and obtains received data.

Among the signals after FFT processing, a signal necessary for estimating a transmission channel response, such as pilot signal is inputted to transmission channel response estimation section 165. Transmission channel response estimation section 165 estimates a transmission channel response of each subcarrier, and obtains a transmission channel response estimation value (transmission channel estimation value).

CSI frame generation section 166 as the transmission control frame generation apparatus calculates CSI of each subcarrier based on the transmission channel estimation value, and generates CSI frames in order to feed back the CSI to transmission apparatus 100. The configuration and operation of CSI frame generation section 166 will be described in detail later.

Encoding section 170 encodes inputted time-series transmission data and CSI frames according to a predetermined coding scheme and coding rate for each subcarrier. Modulation section 171 modulates the encoded transmission data and CSI frames for each subcarrier according to the predetermined modulation scheme. Power control section 172 controls the transmission power of each subcarrier. IFFT section 173 performs IFFT processing of multiplexing the signals modulated for each subcarrier with a plurality of orthogonal subcarriers, and generates OFDM symbols that are multicarrier signals. GI insertion section 174 inserts a GI between OFDM symbols in order to reduce ISI due to a delayed wave. Transmission radio processing section 175 as the transmission section performs predetermined radio processing such as up-conversion on the OFDM symbols, and transmits the OFDM symbols after radio processing from antenna 151 to transmission apparatus 100. Specifically, transmission radio processing section 175 radio transmits the generated CSI frames.

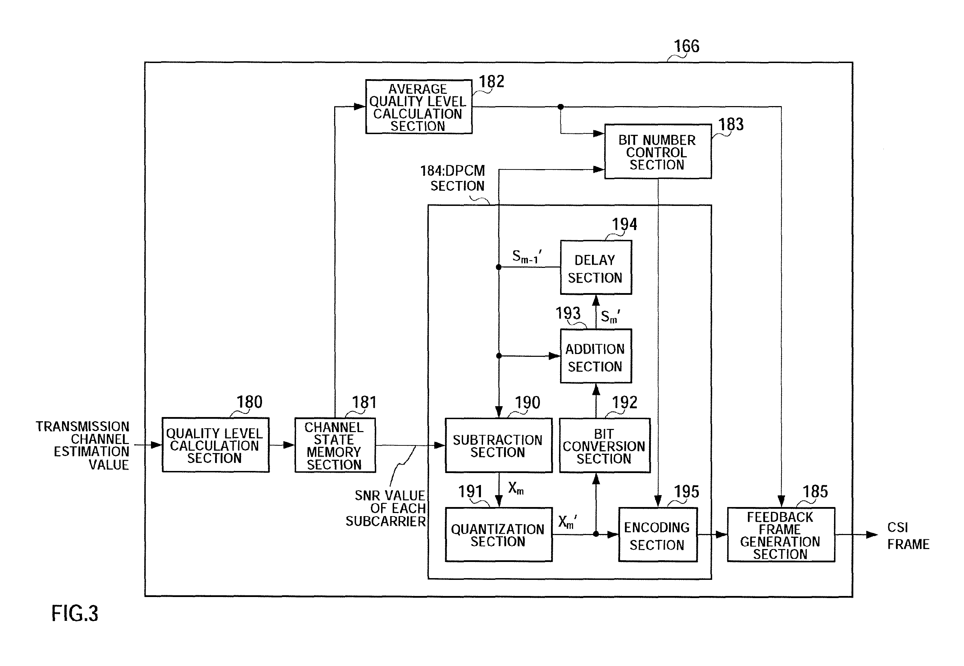

The operation and internal configuration of CSI frame generation section 166 will next be described. As shown in FIG.3, CSI frame generation section 166 has quality level calculation section 180, channel state memory section 181, average quality level calculation section 182, bit number control section 183, DPCM section 184 and feedback frame generation section 185. DPCM section 184 has subtraction section 190, quantization section 191, bit conversion section 192, addition section 193, delay section 194 and encoding section 195.

Quality level calculation section 180 calculates, as a value indicating the channel state, the SNR (Signal to Noise Ratio) of each subcarrier from the transmission channel estimation value of each subcarrier inputted from transmission channel response estimation section 165.

The SNR value described in the following is a logarithmic value, except the case where the use of a true value is described. Here, the case will be described as an example where the SNR is used as an indicator of the quality level (channel state level), but the CNR (Carrier to Noise Ratio), the reception power, the RSSI (Received Signal Strength Indicator), the reception amplitude, and the like may be used as the channel state level instead of the SNR. In a communication system such as a cellular system, in which the interference power as well as the noise power is important as CSI, it is also possible to use the SIR (Signal to Interference Ratio), the CIR (Carrier to Interference Ratio), the SINR (Signal to Interference and Noise Ratio), the CINR (Carrier to Interference and Noise Ratio), and the like as the channel state level. Alternatively, it is also possible to use the number of loading bits calculated from the values indicated by the above-described indexes, the control value such as the transmission power and the weighting coefficients as the channel state level. When a MIMO (Multi-Input Multi-Output) scheme is adopted, a matrix obtained through singular value decomposition, eigenvalue decomposition or QR decomposition, or a value such as a singular value and an eigenvalue may be used as the channel state level. An MCS (Modulation and Coding Scheme) parameter (such as modulation scheme, coding rate and transmission power) calculated from the SNR or SIR may also be used as the CSI information.

Channel state memory section 181 holds the SNR value of each subcarrier calculated by quality level calculation section 180. The SNR values of the subcarriers are sequentially outputted to subtraction section 190 according to numbers (order) given to the subcarriers as identification information.

Average quality level calculation section 182 as the calculation section uses the SNR values of the subcarriers held by channel state memory section 181 and calculates an average SNR value for all the subcarriers. The average SNR value may be the average SNR value of all the subcarriers at a given time, or may be the average SNR value of all the subcarriers within a given period of time.

In this embodiment, the calculated average SNR value is used as the reference quality level of all the subcarriers, but the median SNR, the minimum SNR, the maximum SNR, or the like of all the subcarriers may also be used instead of the average SNR value.

Bit number control section 183 as the encoding control section, controls the encoding processing of DPCM section 184 by variably setting the number of bits used in encoding at encoding section 195, based on the relative size of the SNR value of each subcarrier with respect to the average SNR value. In other words, a variable number of bits is allocated to the difference SNR value generated at encoding section 195. The allocated number of bits is reported to encoding section 195.

In DPCM section 184 as the encoding section, subtraction section 190 subtracts the SNR value inputted from delay section 194 from the SNR value inputted from channel state memory section 181 and calculates a difference SNR value. The SNR value of subcarrier $f_1$ is outputted to quantization section 191 as is.

Quantization section 191 quantizes the difference SNR value (or SNR value) at a step width set in advance.

Bit conversion section 192 converts the step width of the difference SNR value (or SNR value) quantized by quantization section 191. The step width of the difference SNR value (or SNR value) is changed by this conversion from the step width used in quantization by quantization section 191 to the step width used in addition by addition section 193.

Addition section 193 adds the difference SNR value quantized by quantization section 191 and the SNR value inputted from delay section 194. The addition result is outputted to delay section 194. The quantized SNR value of subcarrier $f_1$ is outputted to delay section 194 as is.

Delay section 194 updates the internal state value using the output of addition section 193. The updated state value is then delayed by an amount corresponding to a single subcarrier and is outputted to addition section 193, subtraction section 190 and bit number control section 183.

Encoding section 195 encodes the difference SNR value (or SNR value) quantized by quantization section 191 in the number of bits reported from bit number control section 183.

As the generation section, feedback frame generation section 185 generates a CSI frame using the average SNR value calculated by average quality level calculation section 182, and the difference SNR value of each subcarrier encoded by encoding section 195.

An example of the operation performed in CSI frame generation section 166 will next be described.

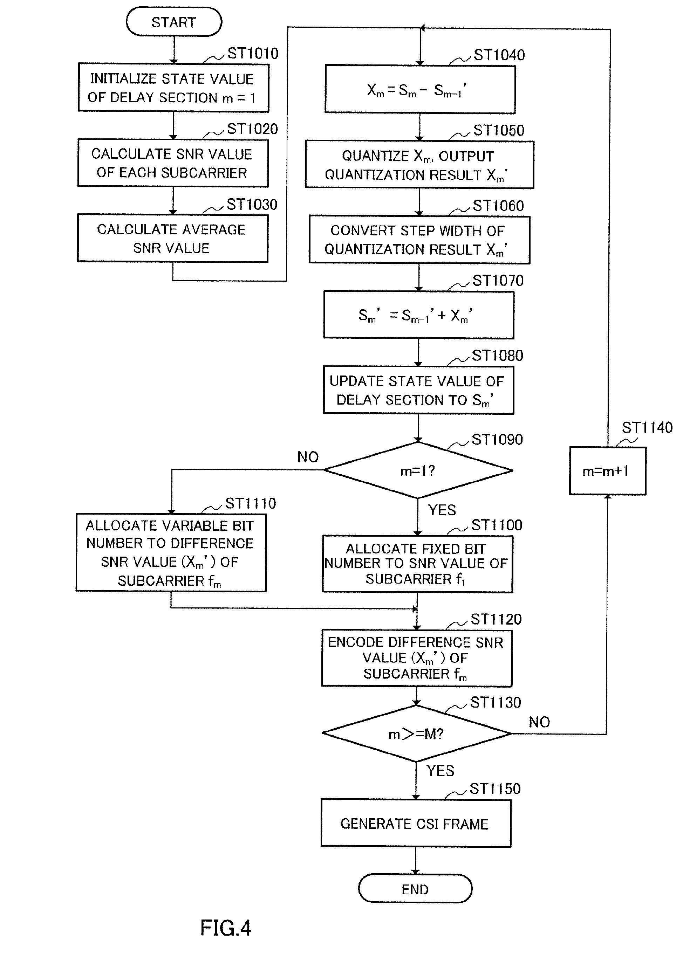

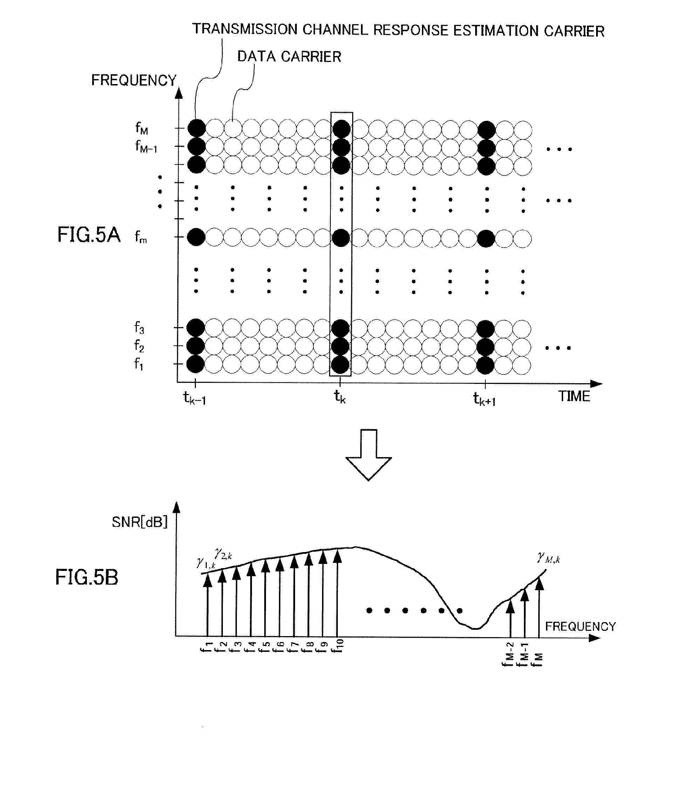

FIG.4 is a flowchart showing an example of the operation performed in CSI frame generation section 166. FIGS.5A and 5B show an example of the configuration of OFDM frames exchanged between transmission/reception stations, the transmission channel response estimation timing and the frequency response estimation values. In the OFDM frames used between transmission apparatus 100 and reception apparatus 150, as shown in FIG.5A, for example, transmission channel response estimation carriers (for example, known pilot signals) used to estimate the frequency response of the transmission channel are inserted between data carriers that are used for other purposes such as data at predetermined intervals . Transmission channel response estimation section 165 estimates amplitude fluctuation and phase fluctuation received at the transmission channel of each subcarrier at time $t_k$ (where k is an integer) using the transmission channel response estimation carriers and outputs the estimation results to quality level calculation section 180. In a system that uses blind estimation, a carrier for data is sometimes used as the transmission channel estimation carrier.

First, when the CSI frame generation processing of CSI frame generation section 166 starts, the state value of delay section 194 is initialized to "0," and the value of counter m is initialized to "1" (ST1010).

SNR value $\gamma_{m,k}$ is then calculated by quality level calculation section 180 for each subcarrier as shown in FIG. 5B from the received frequency response estimation values of the transmission channel(ST1020). SNR value $\gamma_{m,k}$ herein is obtained by logarithmic transformation of the SNR value of the $m^{th}$ subcarrier at time $t_k$ (wherein m = 1, 2, 3, ..., M-1, M). Further, M herein is the total number of subcarriers.

SNR value $\gamma_{m,k}$ calculated by quality level calculation section 180 is stored in channel state memory section 181. SNR value $\gamma_{m,k}$ stored in channel state memory section 181 is updated each time new SNR value $\gamma_{m,k}$ is calculated by quality level calculation section 180.

The frequency of updating the transmission channel response estimation value and calculating SNR value $\gamma_{m,k}$ is set so as to be the same or less than the CSI frame feedback cycle. The updating cycle may also be set independently of the feedback cycle. However, updating processing of channel state memory section 181 is controlled so as not to occur during generation of a CSI frame.

SNR value $\gamma_{m,k}$ calculated for each subcarrier is used by average quality level calculation section 182 to calculate the average SNR value for all the subcarriers (ST1030) . The average SNR value is calculated according to equation 1 below. The true value of the SNR of the $m^{th}$ subcarrier estimated at time $t_k$ is indicated by equation 2 below, and the average SNR value of true values for all the subcarriers is indicated by equation 3 below.

[1]

$$\bar{\gamma}_k = 10\log_{10}(\overline{\Gamma_k})) \qquad \cdots (Equation\ 1)$$

[2]

$$\Gamma_{m,k} = 10^{\gamma_{m,k}/10} \qquad \cdots (Equation\ 2)$$

$\Gamma_{m,k}$:In the equation, $\Gamma_{m,\,k}$ is the SNR value (true value) of the $m^{th}$ subcarrier estimated at time $t_k$.

[3]

$$\overline{\Gamma}_k = \frac{1}{N}\sum_{m=1}^{M}\Gamma_{m,k} \qquad \cdots (Equation\ 3)$$

$\overline{\Gamma}_k$:In the equation, is the average value (true value) of

$$\Gamma_{m,k} \cdot$$

In this example, SNR values that are converted from a logarithmic value to a true value are used to calculate the average SNR value, but the true values of the SNR values obtained in the process of calculating the SNR values in quality level calculation section 180 may also be used.

Subtraction is then performed by subtraction section 190. In this subtraction, the quantized SNR value $S_{m-1}'$ of the m-1$^{th}$ subcarrier $f_{m-1}$ as the output of delay section 194 is subtracted from SNR value $S_m$ of the $m^{th}$ subcarrier $f_m$, and difference SNR value $X_m$ is obtained (ST1040). The quantized SNR value $S_{m-1}'$ is used herein in order to avoid the accumulation of quantization errors $e_m$ that can occur in quantization section 191. The SNR value of subcarrier $f_1$ is outputted to quantization section 191 as is.

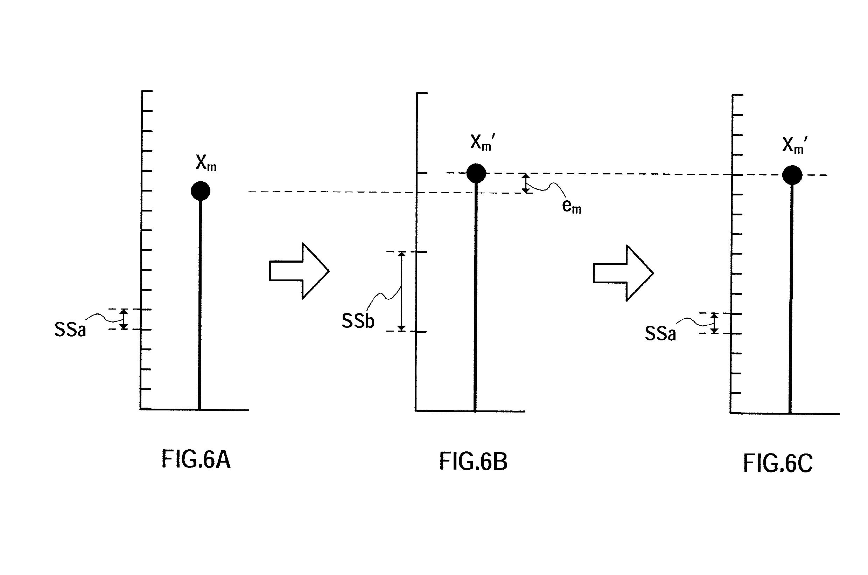

In quantization section 191, difference SNR value $X_m$ (or SNR value) is quantized at the necessary resolution-- the required step width--for the feedback information, and the quantized difference SNR value $X_m'$ (or SNR value) is outputted (ST1050) . Step width SSb of quantization used by quantization section 191 is a fixed value in this embodiment. Step width SSb of the quantized difference SNR value $X_m'$ (or SNR value) shown in FIG.6B is greater than step width SSa used by subtraction section 190 shown in FIG.6A. The quantized difference SNR value $X_m'$ (or SNR value) sometimes includes quantization error $e_m$ (that is, $X_m' = X_m + e_m$).

The step width of the quantized difference SNR value $X_m'$ (or SNR value) is converted by bit conversion section 192 (ST1060). The converted step width is SSa, as shown in FIG.6C. In other words, through this conversion, difference SNR value $X_m'$ (or SNR value) is re-expressed as the step width and the number of bits used by subtraction section 190, addition section 193 and delay section 194.

The converted difference SNR value $X_m'$ is added by addition section 193 to the quantized SNR value $S_{m-1}'$ of the m-1$^{th}$ subcarrier $f_{m-1}$, which is the output of delay section 194 (ST1070). The addition result is outputted as the quantized SNR value $S_m'$ of the $m^{th}$ subcarrier $f_m$ to delay section 194. The quantized SNR value of subcarrier $f_1$ is outputted from addition section 193 to delay section 194 as is. The state value of delay section 194 is then updated to SNR value $S_m'$ (ST1080).

The quantized SNR value $S_{m-1}$' of subcarrier $f_{m-1}$ inputted from delay section 194 is also compared by bit number control section 183 to a reference value (threshold value) calculated from the average SNR value. The number of bits used in encoding of difference SNR value $X_m$' (or SNR value) is determined based on the comparison results, and reported to encoding section 195. The bit number control processing performed by bit number control section 183 will be specifically described hereinafter.

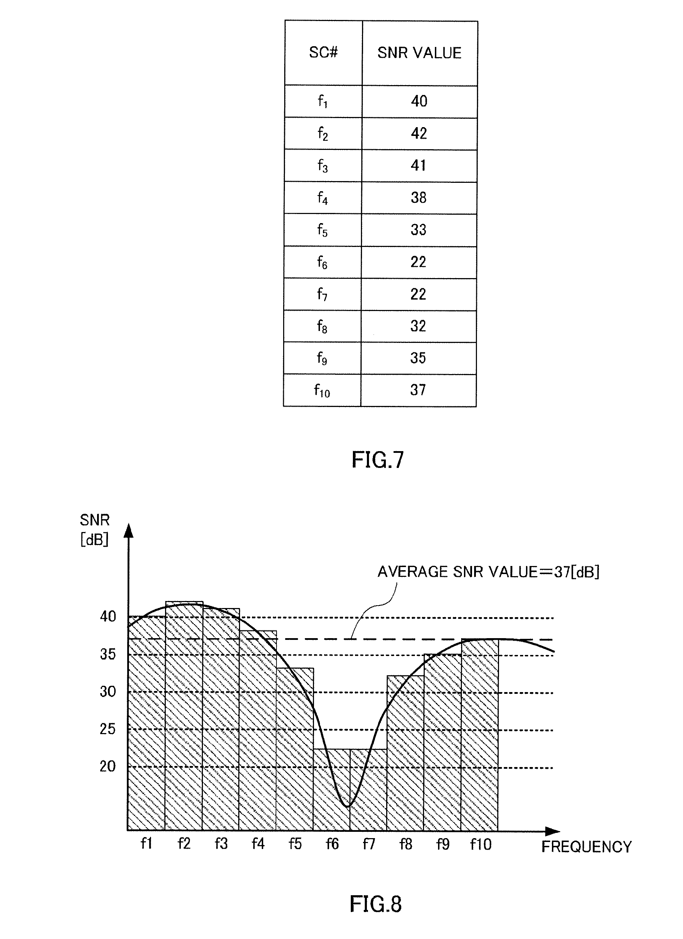

FIG.7 shows the SNR values of the subcarriers at a given time. FIG.8 shows the waveform of the SNR values and frequency characteristics of the subcarriers. The average SNR herein is 37 [dB] (decimal places are truncated). Ten subcarriers $f_1$ through $f_{10}$ are used in this example, but the number of subcarriers and the range of possible SNR values are not limited.

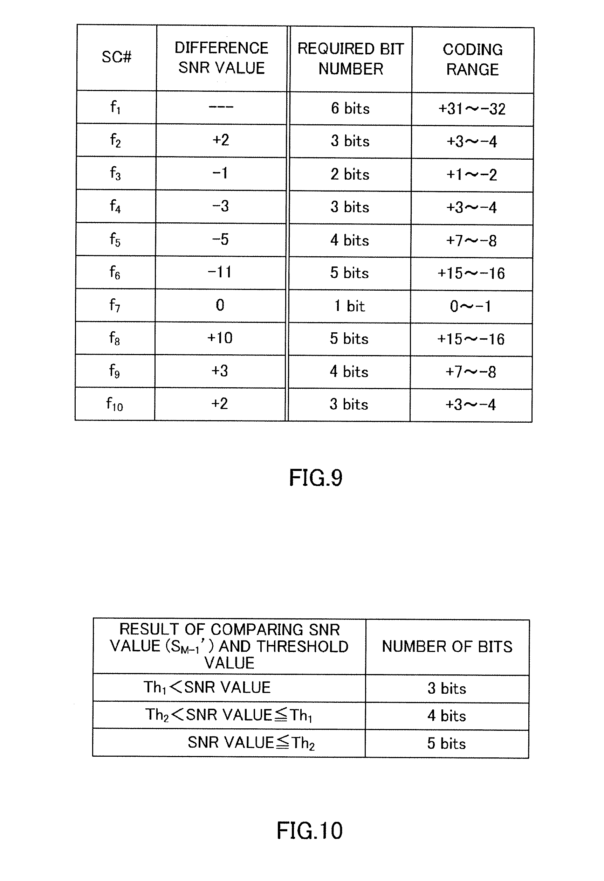

The difference SNR values associated with subcarriers $f_2$ through $f_{10}$ are shown in FIG.9. FIG.9 also shows the required number of bits for the SNR value of subcarrier $f_1$ and the difference SNR values of subcarriers $f_2$ through $f_{10}$. FIG.9 also shows the encoding ranges that correspond to the required numbers of bits of subcarriers $f_1$ through $f_{10}$.

Specifically, the SNR value of subcarrier $f_2$, for example, is 2 [dB] larger than the SNR value of subcarrier $f_1$, and therefore the difference SNR value of subcarrier $f_2$ is 2 [dB]. Three bits are necessary to encode the difference SNR value "2" without saturation. The step width is assumed to be 1 dB/bit and is a 2's complement. A difference SNR value from +3 [dB] to -4 [dB] can be encoded in 3 bits.

In bit number control section 183, the average SNR value is used as is as a reference value, or a threshold value as the reference value is calculated from the average SNR value. The threshold value is calculated by a function which uses the average SNR value as an argument. For example, when two threshold values $Th_1$ and $Th_2$ are used, threshold values $Th_1$ and $Th_2$ are calculated by adding each of two predetermined offset values (constants) to the average SNR value. More specifically, when the average SNR value is 37 [dB], and the two offset values are "+3" and "-3," threshold value $Th_1$ is 40 [dB], and threshold value $Th_2$ is 34 [dB]. The encoding of the difference SNR value can be controlled more appropriately by using reference values such as those described above.

Bit number control section 183 determines whether or not counter m is "1" when performing bit number control (ST1090).

When counter m is "1," (ST1090: YES), a fixed number of bits, more specifically, the number of bits that is already known between transmission and reception, is allocated to the SNR value of subcarrier $f_1$ (ST1100).

When counter m is not "1," (ST1090: NO), a variable number of bits is allocated to difference SNR value $X_m$' of subcarrier $f_m$ (ST1110).

More specifically, SNR value $S_{m-1}$' inputted from delay section 194 is compared with threshold values $Th_1$ and $Th_2$. The number of bits is then determined according to the comparison result. For example, the number of bits is determined according to a table (FIG.10) showing the correspondence between the comparison result and the number of bits. In this table, the number of bits is "3" when $Th_1 < S_{m-1}$', the number of bits is "4" when $Th_2 < S_{m-1}$' $\leq Th_1$, and the number of bits is "5" when $S_{m-1}$' $\leq Th_2$.

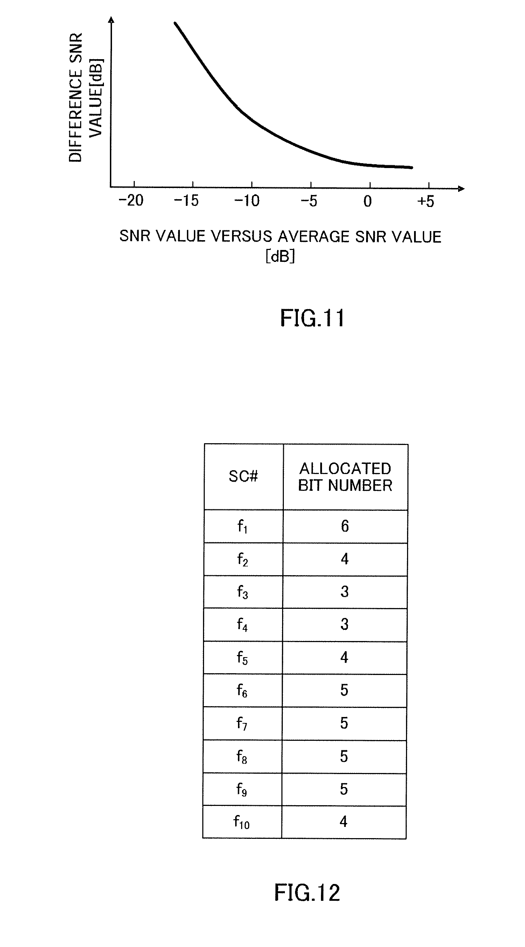

The correspondence between the comparison result (result of comparing SNR value $S_{m-1}$' and the reference value) and the number of bits will be described herein. In particular, a Rayleigh fading channel has characteristics as shown in FIG.11 between the relative size of the SNR value with respect to the average SNR value (SNR value/average SNR value) and the difference of the SNR values of adjacent subcarriers (difference SNR value). Specifically, the difference SNR value decreases in accordance with an increase in the SNR value/average SNR value, and the difference SNR value increases in accordance with a decrease in the SNR value/average SNR value. Accordingly, in bit number control section 183, the number of bits allocated to the encoded difference SNR value is associated with the SNR value/average SNR value, reduced in accordance with an increase in the SNR value/average SNR value, and increased in accordance with a decrease in the SNR value/average SNR value.

The number of bits may be calculated using a function instead of the table shown in FIG.10. For example, when the SNR value is a logarithmic value, a function that can derive the number of bits from the result of subtracting threshold value $Th_1$ (or threshold value $Th_2$) from the SNR value is used. When the SNR value is a true value, a function that can derive the number of bits from the result of dividing the SNR value by threshold value $Th_1$ (or threshold value $Th_2$) is used.

The numbers of bits allocated to the difference SNR values (or SNR values) of the subcarriers by the above-described processing are shown in FIG.12. Specifically, the number of bits allocated to the SNR value of subcarrier $f_1$ is a fixed number ("6" in this embodiment), and the numbers of bits allocated to the difference SNR values of subcarriers $f_2$ through $f_{10}$ are variable values. The allocated numbers of bits are reported to encoding section 195.

After the number of bits is allocated to the SNR value of subcarrier $f_1$ or any of difference SNR values $X_2$' through $X_M$' of subcarriers $f_2$ through $f_M$, difference SNR value $X_m$' of subcarrier $f_m$ is encoded by encoding section 195 using the number of bits allocated to difference SNR value $X_m$' of subcarrier $f_m$ (ST1120). Alternatively, the SNR value of subcarrier $f_1$ is encoded using the number of bits allocated to the SNR value of subcarrier $f_1$.

It is then determined whether or not counter m is equal to or greater than the number of subcarriers M (ST1130). When counter m is less than M (ST1130: NO), counter m is updated to m+1 in step ST1140, and the flow returns to step ST1040. When counter m is equal to or greater than M (ST1130: YES), the flow proceeds to step ST1150.

In step ST1150, a CSI frame is generated in feedback frame generation section 185 using the output of encoding section 195 (that is, the SNR value of subcarrier $f_1$ and difference SNR values $X_2'$ through $X_M'$ of subcarriers $f_2$ through $f_M$) and the output of average quality level calculation section 182 (the average SNR value). After the CSI frame is generated, the operation of CSI frame generation section 166 at time $t_k$ ends.

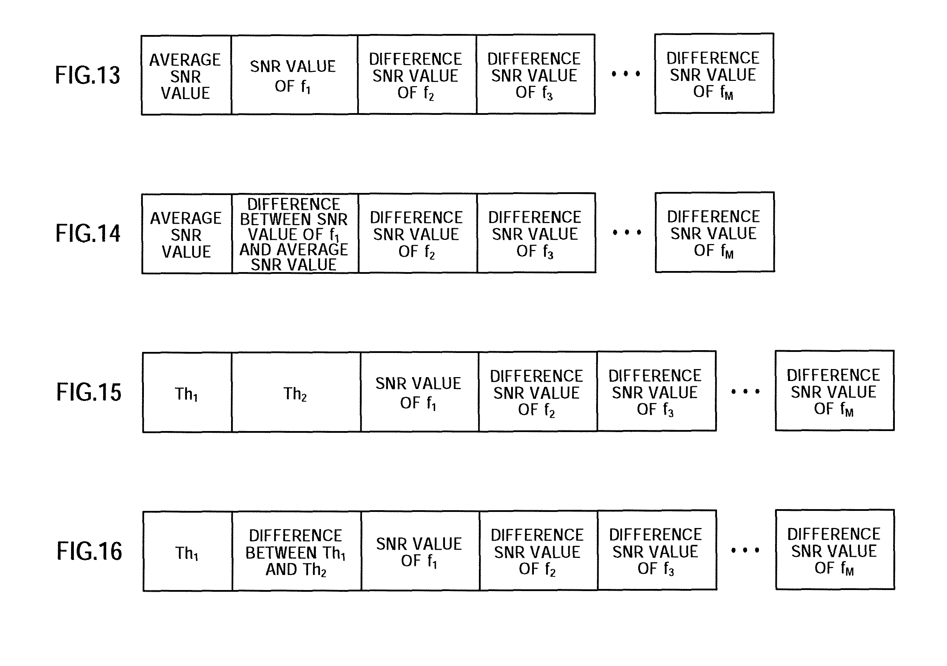

FIG.13 shows an example of the format of the generated CSI frame. In FIG.13, the average SNR value is arranged at the beginning of the CSI frame, the SNR value of subcarrier $f_1$ is arranged after the average SNR, and, subsequently, the difference SNR values of subcarriers $f_2$ through $f_M$ are arranged in ascending order of the subcarrier number.

The frame format shown in FIG.14 may also be used instead of the frame format shown in FIG.13. In FIG.14, the difference between the SNR value of subcarrier $f_1$ and the average SNR value is arranged after the average SNR. Subsequently, the difference SNR values of subcarriers $f_2$ through $f_M$ are arranged in ascending order of the subcarrier number. When this frame format is used, the average SNR value is subtracted from the SNR value of subcarrier $f_1$ in CSI frame generation section 166, while the average SNR value is added to the difference between the average SNR value and the SNR value of subcarrier $f_1$ in CSI frame processing section 110.

A CSI frame in the format shown, for example, in FIG.15 is generated when threshold values $Th_1$ and $Th_2$ derived from the average SNR value are used in bit number control. In FIG.15, threshold values $Th_1$ and $Th_2$ are sequentially arranged at the beginning of the CSI frame. After threshold values $Th_1$ and $Th_2$, the SNR value of subcarrier $f_1$ are arranged, and, subsequently, the difference SNR values of subcarriers $f_2$ through $f_M$ are arranged in ascending order of the subcarrier number.

The frame format shown in FIG.16 may also be used instead of the frame format shown in FIG.15. In FIG.16, threshold value $Th_1$ is arranged at the beginning of the CSI frame, and, subsequently, the difference between threshold value $Th_1$ and threshold value $Th_2$ is arranged. After this difference, the SNR value of subcarrier $f_1$ is arranged, and, subsequently, the difference SNR values of subcarriers $f_2$ through $f_M$ are arranged in ascending order of the subcarrier number. In this case, threshold value $Th_1$ is subtracted from threshold value $Th_2$ in CSI frame generation section 166, while threshold value $Th_1$ is added to the difference between threshold value $Th_1$ and threshold value $Th_2$ in CSI frame processing section 110.

The frame format is not limited to the above-described frame formats. For example, a frame format may be used in which the average SNR value is added to the end of the CSI frame. It is also possible to use a frame format in which the difference SNR values or SNR values are arranged in descending order of the subcarrier number. An arbitrary frame format can be adopted providing that the frame format has the arrangement order specified in common between transmission and reception.

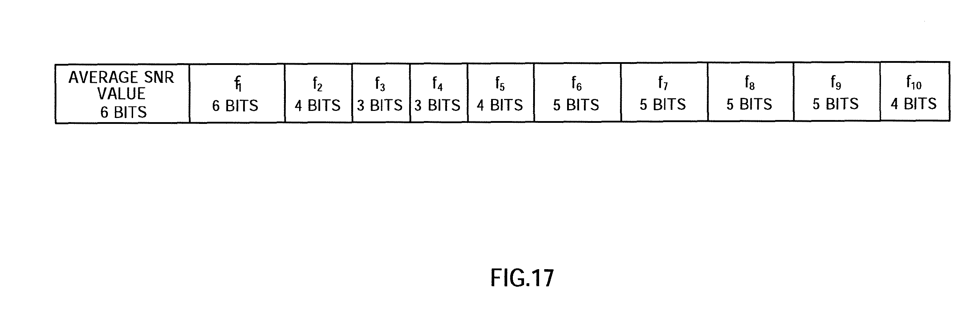

When a CSI frame having the frame format shown in FIG.13 is generated using the SNR values or difference SNR values encoded in the number of bits allocated in the above-described operation example, the average SNR value is indicated by 6 bits, the SNR value of subcarrier $f_1$ is indicated by 6 bits, the difference SNR value of subcarrier $f_2$ is indicated by 4 bits, the difference SNR value of subcarrier $f_3$ is indicated by 3 bits, the difference SNR value of subcarrier $f_4$ is indicated by 3 bits, the difference SNR value of subcarrier $f_5$ is indicated by 4 bits, the difference SNRvalueof subcarrier $f_6$ is indicated by 5 bits, the difference SNR value of subcarrier $f_7$ is indicated by 5 bits, the difference SNR value of subcarrier $f_8$ is indicated by 5 bits, the difference SNR value of subcarrier $f_9$ is indicated by 5 bits, and the difference SNR value of subcarrier $f_{10}$ is indicated by 4 bits, as shown in FIG.17.

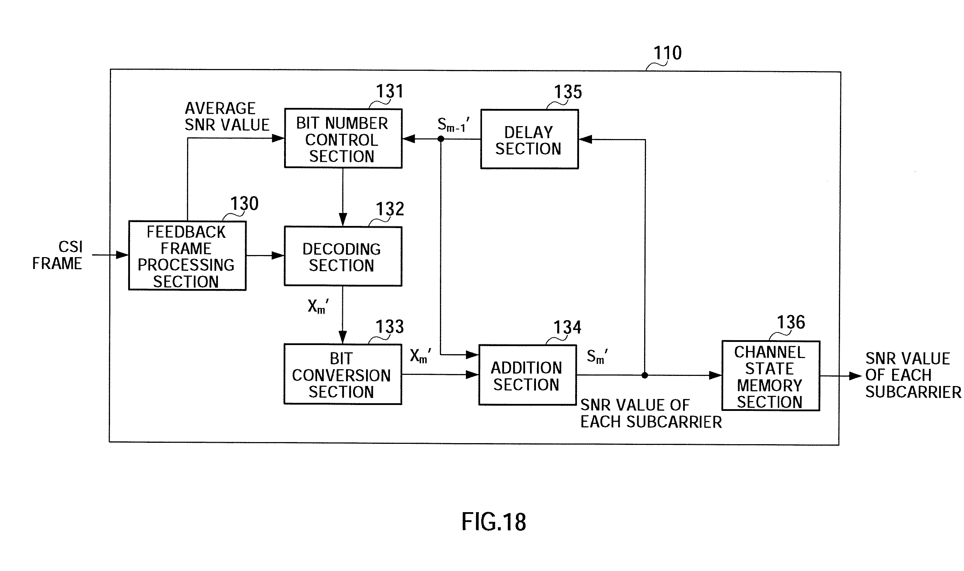

The operation and internal configuration of CSI frame processing section 110 will next be described. As shown in FIG.18, CSI frame processing section 110 has feedback frame processing section 130, bit number control section 131, decoding section 132, bit conversion section 133, addition section 134, delay section 135 and channel state memory section 136.

Feedback frame processing section 130 as the acquisition section acquires the CSI frame transmitted from reception apparatus 150. A reference value (average SNR value in this embodiment) is extracted from the CSI frame and is outputted to bit number control section 131. The average SNR value is extracted when the CSI frame of FIG.13 is used, for example. When the CSI frame of FIG.15 is used, for example, threshold values $Th_1$ and $Th_2$ are extracted. The remaining portion of the CSI frame is outputted to decoding section 132.

Bit number control section 131 as the decoding control section receives the input from feedback frame processing section 130 and delay section 135 and controls the number of bits used for decoding in decoding section 132 based on the relative size of the SNR value of each subcarrier with respect to the average SNR value. In other words, a variable number of bits is allocated to the difference SNR value decoded in decoding section 132. The allocated number of bits is reported to decoding section 132.

Decoding section 132 decodes the difference SNR value (or SNR value) of each subcarrier by dividing the CSI frame (portion other than the average SNR value) inputted from feedback frame processing section 130 into difference SNR values (or SNR values) for each subcarrier according to the number of bits reported from bit number control section 131.

Bit conversion section 133 converts the step width of the decoded difference SNR value (or SNR value). Through this conversion, the step width of the difference SNR value (or SNR value) is changed from the step width used in quantization by quantization section 191 to the step width used in addition by addition section 134.

Addition section 134 adds the output of bit conversion section 133 and the output of delay section 135. The SNR values of the subcarriers obtained by this addition are outputted to delay section 135 and channel state memory section 136. The SNR value of subcarrier $f_1$ is outputted to delay section 135 and channel state memory section 136 as is.

Delay section 135 updates the internal state value using the output of addition section 134. The updated state value is then delayed by an amount corresponding to a single subcarrier and is outputted to addition section 134 and bit number control section 131.

Channel state memory section 136 holds the SNR values of each subcarrier inputted from addition section 134. The held SNR values are outputted to modulation parameter determination section 111 as CSI of each subcarrier.

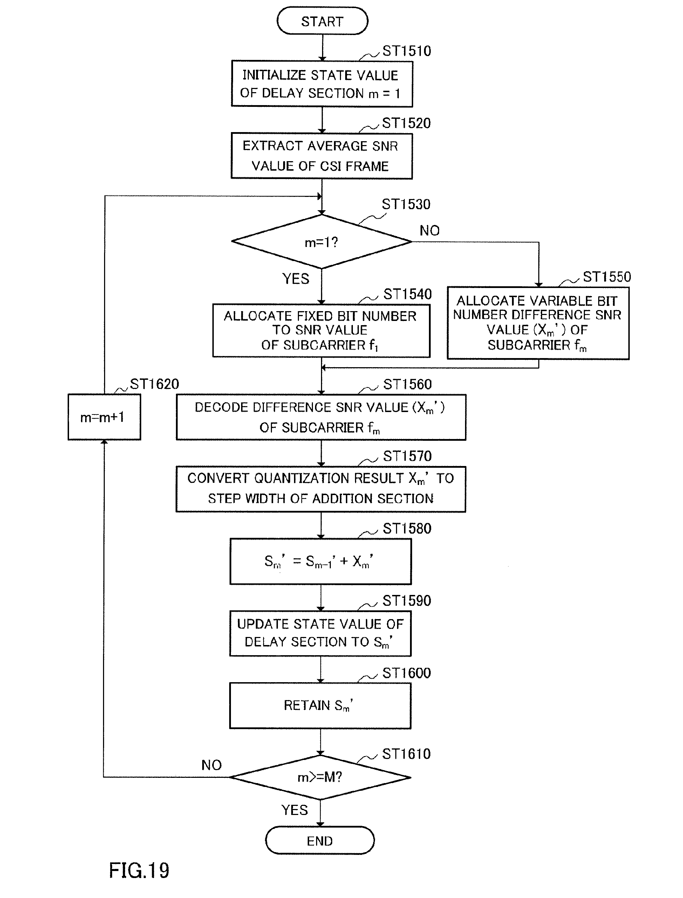

An example of the operation performed in CSI frame processing section 110 will next be described. FIG.19 is a flowchart showing an example of the operation performed in CSI frame processing section 110.

First, the state value of delay section 135 is initialized to "0, " and counter m is initialized to "1" (ST1510).

The average SNR value is then extracted from the CSI frame by feedback frame processing section 130 (ST1520). It is then determined whether or not counter m is "1" (ST1530).

When counter m is "1," (ST1530: YES), a fixed number of bits, more specifically, the number of bits that is already known between transmission and reception, is allocated to the SNR value of subcarrier $f_1$ (ST1540).

When countermis not "1," (ST1530: NO), a variable number of bits is allocated to difference SNR value $X_m'$ of subcarrier $f_m$ (ST1550). The specific operation for allocating the variable number of bits is the same as that of bit number control section 183 of CSI frame generation section 166.

After the number of bits is allocated to the SNR value of subcarrier $f_1$ or any of difference SNR values $X_2'$ through $X_M'$ of subcarriers $f_2$ through $f_M$, difference SNR value $X_m'$ of subcarrier $f_m$ is decoded by decoding section 132 using the number of bits allocated to difference SNR value $X_m'$ of subcarrier $f_m$ (ST1560). Alternatively, the SNR value of subcarrier $f_1$ is decoded using the number of bits allocated to the SNR value of subcarrier $f_1$.

The step width of the decoded difference SNR value (or SNR value) is converted by bit conversion section 133 (ST1570). The converted step width is adapted to the step width used in addition section 134. The step width before conversion is SSb shown in FIG.6B, and the converted step width is SSa shown in FIG.6C. When no quantization error occurs in bit conversion section 133, the converted step width does not always have to be SSa shown in FIG.6C.

The converted difference SNR value $X_m'$ is added by addition section 134 to SNR value $S_{m-1}'$ of the m-1th subcarrier $f_{m-1}$, which is the output of delay section 135 (ST1580). The addition result is outputted as SNR value $S_m'$ of the $m^{th}$ subcarrier $f_m$ to delay section 135 and channel state memory section 136. The SNR value of subcarrier $f_1$ is outputted from addition section 134 to delay section 135 and channel state memory section 136 as is. The state value of delay section 135 is then updated to SNR value $S_m'$ (ST1590). SNR value $S_m'$ is also held by channel state memory section 136 (ST1600).

It is then determined whether or not counter m is equal to or greater than the number of subcarriers M (ST1610). When counter m is less than M (ST1610: NO), counter m is updated to m+1 in step ST1620, and the flow returns to step ST1530. When counter m is equal to or greater than M (ST1610: YES), the operation of CSI frame processing section 110 at time $t_k$ ends.

In this way, according to this embodiment, the number of bits allocated to the difference value (difference SNR value) between the SNR value (first SNR value) of a given subcarrier and the SNR value (second SNR value) of the adjacent subcarrier is associated with the relative size of the second SNR value with respect to the average SNR value. It is thereby possible to allocate the minimum number of bits according to the possible range (dynamic range) of the difference SNR value in reception apparatus 150, and in addition, generate a CSI frame without adding the information relating to the allocation as side information even when a plurality of different numbers of bits are allocated to a plurality of different difference SNR values, so that it is possible to maintain the quality of the feedback information and reduce the amount of data in the feedback information.

According to this embodiment, the number of bits allocated to the difference value between the first SNR value and the second SNR value is associated with the relative size of the second SNR value with respect to the average SNR value in transmission apparatus 150. It is thereby possible to allocate a minimum number of bits according to the dynamic range, and in addition, restore the CSI frame without referring to the information relating to the allocation as side information even when a plurality of different numbers of bits are allocated to a plurality of different difference SNR values, so that it is possible to maintain the quality of the feedback information and reduce the amount of data in the feedback information.

(Embodiment 2)

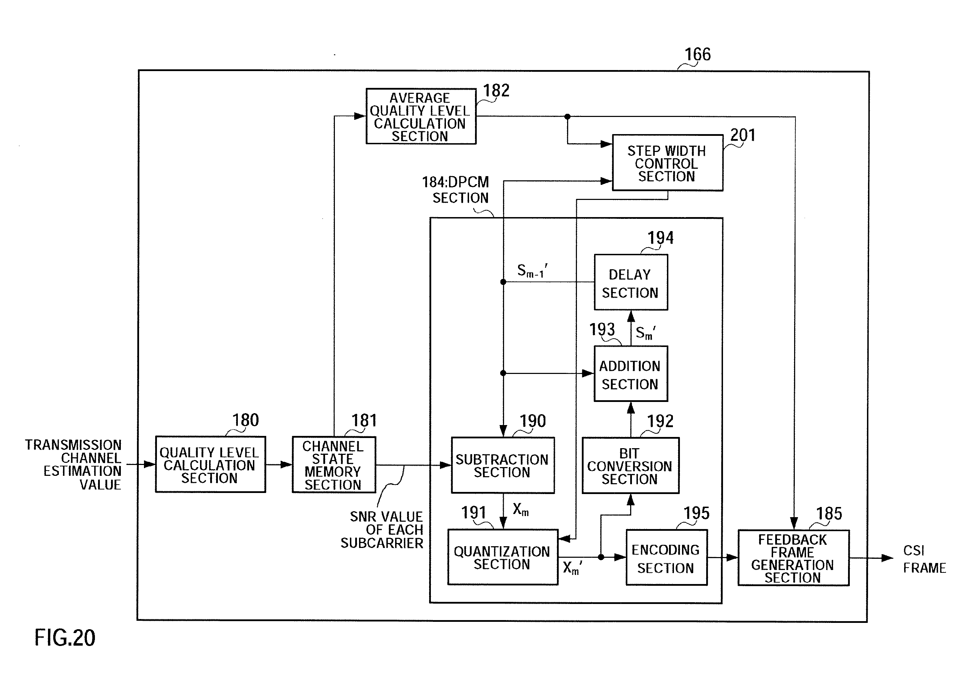

FIG.20 is a block diagram showing the configuration of CSI frame generation section 166 provided to the reception apparatus according to Embodiment 2 of the present invention. The reception apparatus of this embodiment has the same basic configuration as reception apparatus 150 described in Embodiment 1. Therefore, components that are the same as or similar to those described in Embodiment 1 will be assigned the same reference numerals. The difference between this embodiment and Embodiment 1 will be mainly described in the following.

CSI frame generation section 166 of FIG.20 has step width control section 201 instead of bit number control section 183 described in Embodiment 1.

Step width control section 201 as the encoding control section variably sets the step width used for quantization by quantization section 191 based on the relative size of the SNR value of each subcarrier with respect to the average SNR value, and thereby controls the encoding processing of DPCM section 184. The step width herein is the size of the amplitude per bit, that is, the size of an SNR value indicated with a single bit. In other words, a variable step width is set for the quantized difference SNR value. That is, step width SSb of quantization shown in FIG.6B is variably set. The set step width is reported to quantization section 191 and bit conversion section 192.

Accordingly, quantization section 191 of this embodiment uses the step width reported from step width control section 201 and performs the quantization processing described in Embodiment 1. Bit conversion section 192 of this embodiment performs the step width conversion described in Embodiment 1 using the step width reported from step width control section 201. Encoding section 195 of this embodiment also performs the encoding processing described in Embodiment 1 using a fixed number of bits set in advance.

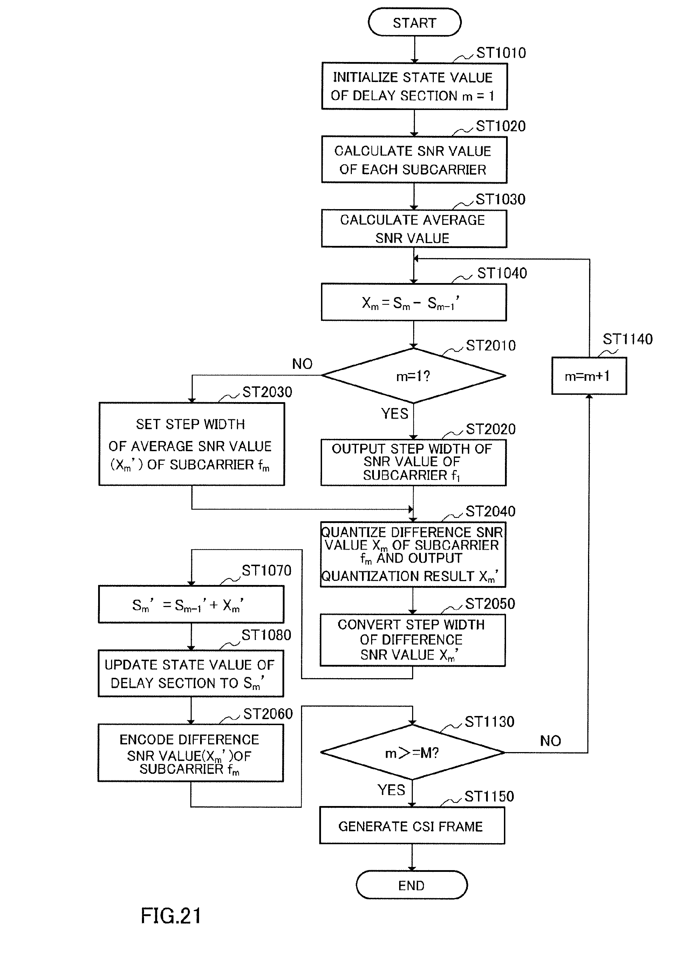

An example of the operation performed in CSI frame generation section 166 will next be described. FIG.21 is a flowchart showing an example of the operation performed in CSI frame generation section 166. The configuration of the OFDM frame exchanged between transmission and reception, transmission channel response estimation timing and frequency response estimation value, used herein are the same as those shown in FIGs.5A and 5B. The processings that are the same as those described in Embodiment 1 using FIG.4 will be assigned the same reference numerals without further explanations.

In step ST2010 subsequent to step ST1040, step width control section 201 determines whether or not counter m is "1."

When counter m is "1" (ST2010: YES), a fixed step width that is set in advance for the SNR value of subcarrier $f_1$, more specifically, a step width that is already known between transmission and reception is outputted (ST2020).

When counter m is not "1" (ST2010: NO), a variable step width is set for difference SNR value $X_m$' of subcarrier $f_m$ (ST2030).

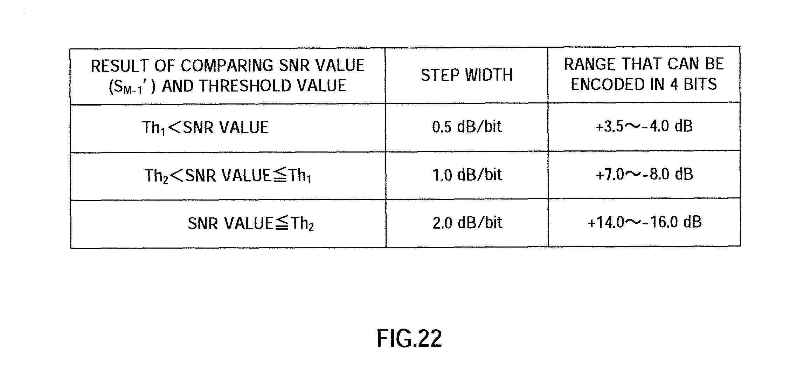

More specifically, a reference value (threshold value) and SNR value $S_{m-1}$' inputted from delay section 194 are compared. When threshold values $Th_1$ and $Th_2$ described in Embodiment 1 are used, SNR value $S_{m-1}$' is compared with threshold values $Th_1$ and $Th_2$. The step width is determined according to the comparison result. For example, the step width is determined according to a table (FIG.22) showing the relationship between the comparison result and the step width. In this table, the step width is "0.5 dB/bit" when $Th_1 < S_{m-1}$', the step width is "1.0 dB/bit" when $Th_2 < S_{m-1}$' $\leq Th_1$, and the step width is "2.0 dB/bit" when $S_{m-1}' \leq Th_2$.

The correspondence between the comparison result (result of comparing SNR value $S_{m-1}$' and the reference value) and the step width will be described herein. In particular a Rayleigh fading channel has characteristics that the difference SNR value decreases in accordance with an increase in the SNR value/average SNR value, and the difference SNR value increases in accordance with a decrease in the SNR value/average SNR value (FIG.11). Accordingly, in step width control section 201, the step width used in quantization is associated with the SNR value/average SNR value, narrowed in accordance with an increase in the SNR value/average SNR value, and expanded in accordance with a decrease in the SNR value/average SNR value.

The step width may be calculated using a function instead of the table shown in FIG.22. For example, when the SNR value is a logarithmic value, a function that can derive the step width from the result of subtracting threshold value $Th_1$ (or threshold value $Th_2$) from the SNR value is used. When the SNR value is a true value, a function that can derive the step width from the result of dividing the SNR value by threshold value $Th_1$ (or threshold value $Th_2$) is used.

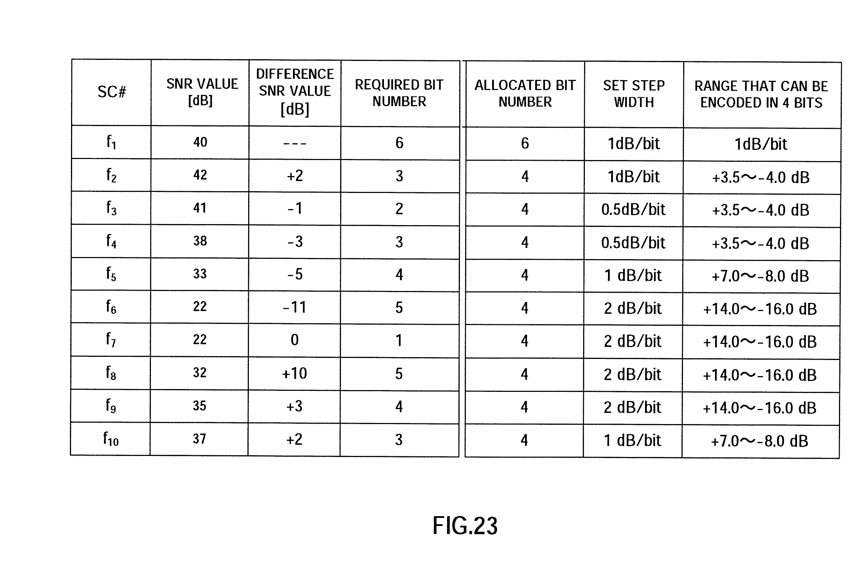

FIG.23 shows the step widths that are set for the quantization of the difference SNR values (or SNR values) of the subcarriers when the SNR values and frequency characteristics are assumed to be those shown in FIGs.7 and 8. Specifically, the step width used to quantize the SNR value of subcarrier $f_1$ is a fixed value ("1 dB/bit" in this embodiment), and the step widths used to quantize the difference SNR values of subcarriers $f_2$ through $f_{10}$ are variable values. These step widths are reported to quantization section 191 and bit conversion section 192.

After a step width is set for the SNR value of subcarrier $f_1$ or any of difference SNR values $X_2$' through $X_M$' of subcarriers $f_2$ through $f_M$, difference SNR value $X_m$' of subcarrier $f_m$ is quantized by quantization section 191 using the step width that is set for difference SNR value $X_m$' of subcarrier $f_m$ (ST2040). Alternatively, the SNR value of subcarrier $f_1$ is quantized using the step width that is set for the SNR value of subcarrier $f_1$. Specifically, as shown in FIG.23, the SNR value of subcarrier $f_1$ is quantized using a step width of 1 dB/bit; the difference SNR value of subcarrier $f_2$ is quantized using a step width of 1 dB/bit; the difference SNR value of subcarrier $f_3$ is quantized using a step width of 0.5 dB/bit; the difference SNR value of subcarrier $f_4$ is quantized using a step width of 0.5 dB/bit; the difference SNR value of subcarrier $f_5$ is quantized using a step width of 1 dB/bit; the difference SNR value of subcarrier $f_6$ is quantized using

a step width of 2 dB/bit; the difference SNR value of subcarrier $f_7$ is quantized using a step width of 2 dB/bit; the difference SNR value of subcarrier $f_8$ is quantized using a step width of 2 dB/bit; the difference SNR value of subcarrier $f_9$ is quantized using a step width of 2 dB/bit; and the difference SNR value of subcarrier $f_{10}$ is quantized using a step width of 1 dB/bit.

The step width of the quantized SNR value $X_m$' (or SNR value) is then converted by bit conversion section 192 based on the step width reported from step width control section 201 (ST2050). The converted step width is SSa, as shown in FIG.6C. In other words, through this conversion, difference SNR value $X_m$' (or SNR value) is re-expressed as the step width and number of bits used by subtraction section 190, addition section 193 and delay section 194. After step ST2050, the processing of step ST2060 is executed after steps ST1070 and ST1080 described in Embodiment 1.

In step ST2060, difference SNR value $X_m$' of subcarrier $f_m$ is encoded by encoding section 195 using the number of bits that is set in advance for difference SNR value $X_m$' of subcarrier $f_m$. Alternatively, the SNR value of subcarrier $f_1$ is encoded using the number of bits that is set in advance for the SNR value of subcarrier $f_1$ In this embodiment, the SNR value of subcarrier $f_1$ is encoded with 6 bits, and the difference SNR values of subcarriers $f_2$ through $f_M$ are encoded with 4 bits.

CSI frame generation section 166 of this embodiment reduces the quantization errors by setting a small step width for areas (subcarriers) in which the difference SNR value is relatively small, on the other hand, increases the dynamic range and reduces the errors due to saturation by setting a large step width for areas (subcarriers) in which the difference SNR value is relatively large. Accordingly, when the conventional DPCM that always uses a fixed quantization step width and the DPCM of this embodiment are compared assuming that the same number of coding bits is used, waveform distortion becomes smaller in the DPCM of this embodiment. In other words, in order to realize distortion level equivalent to that of the DPCM of this embodiment using the conventional DPCM, it is necessary to use a larger number of bits than the number of bits used in encoding for the DPCM of this embodiment. Specifically, the DPCM of this embodiment is capable of maintaining the quality of the feedback information and reducing the amount of data in the feedback information.

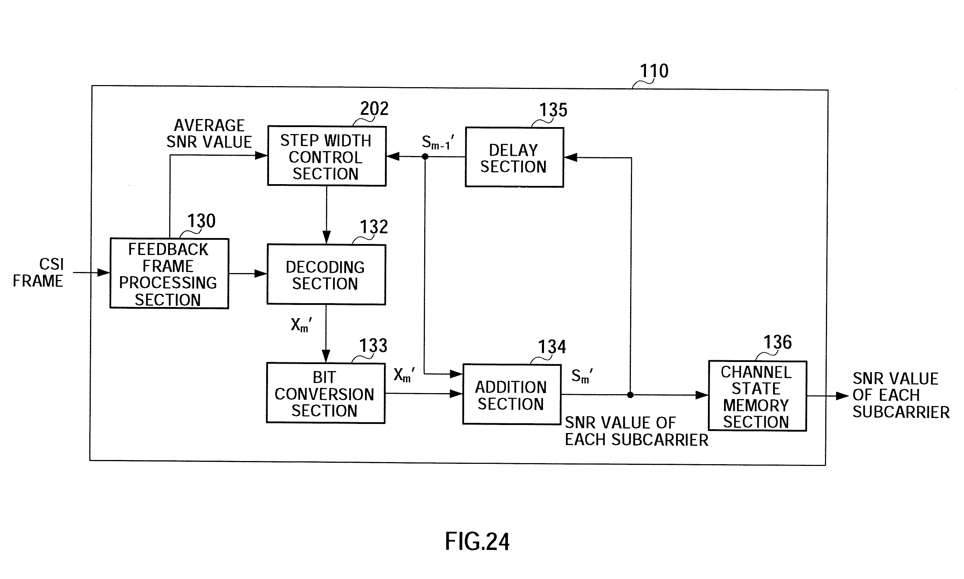

CSI frame processing section 110 provided to the transmission apparatus according to this embodiment will next be described using FIG.24. The transmission apparatus of this embodiment has the same basic configuration as transmission apparatus 100 described in Embodiment 1. Therefore, components that are the same as or similar to those described in Embodiment 1 will be assigned the same reference numerals. The differences between this embodiment and Embodiment 1 will be mainly described in the following.

CSI frame processing section 110 shown in FIG.24 has step width control section 202 instead of bit number control section 131 described in Embodiment 1.

Step width control section 202 as the decoding control section receives the input from feedback frame processing section 130 and delay section 135, and controls the decoding of the difference SNR value (or SNR value) based on the relative size of the SNR value of each subcarrier with respect to the average SNR value by variably setting the step width used in step width conversion by bit conversion section 133. In other words, the step width of the difference SNR value (or SNR value) for which step width conversion is performed is variably set. The set step width is reported to bit conversion section 133.

Bit conversion section 133 converts the step width of the decoded difference SNR value (or SNR value) according to the step width reported from step width control section 202. Through this conversion, the step width of the difference SNR value (or SNR value) is changed from the step width used in quantization by quantization section 191 to the step width used in addition by addition section 134.

In this embodiment, decoding section 132 decodes the difference SNR value (or SNR value) of each subcarrier by dividing the CSI frame (portion other than the average SNR value) inputted from feedback frame processing section 130 into difference SNR values (or SNR values) for each subcarrier according to the number of bits set in advance.

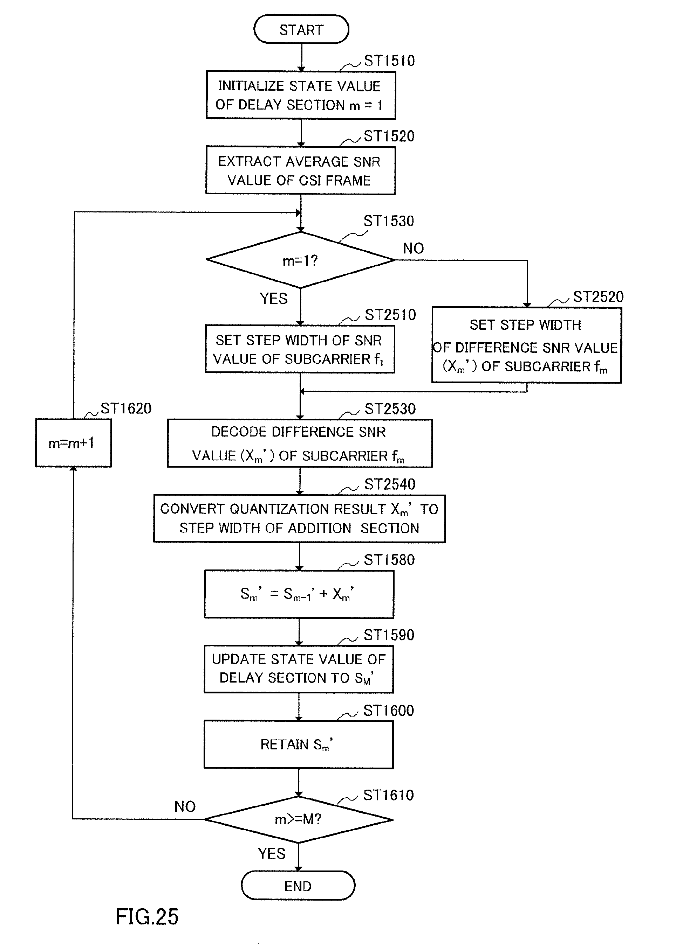

The operation performed in CSI frame processing section 110 will next be described. FIG.25 is a flowchart showing an example of the operation performed in CSI frame processing section 110. Processings that are the same as those described in Embodiment 1 using FIG.19 will be assigned the same reference numerals without further explanations.

When counter m is "1" (ST1530: YES), a fixed step width that is set in advance for the SNR value of subcarrier $f_1$, more specifically, a step width that is already known between transmission and reception, is outputted (ST2510).

When counter m is not "1" (ST1530: NO), a variable step width is set for difference SNR value $X_m$' of subcarrier $f_m$ (ST2520) . The specific operation for setting the variable step width is the same as that of step width control section 201 of CSI frame generation section 166.

After a step width is set for the SNR value of subcarrier $f_1$ or any of the difference SNR values $X_2$' through $X_M$' of subcarriers $f_2$ through $f_M$, difference SNR value $X_m$' of subcarrier fm is decoded by decoding section 132 using the fixed number of bits that is set in advance for difference SNR value $X_m$' of subcarrier $f_m$ (ST2530). Alternatively, the SNR value of subcarrier $f_1$ is decoded using the fixed number of bits that is set in advance for the SNR value of subcarrier $f_1$.

The step width of the decoded difference SNR value (or SNR value) is converted by bit conversion section 133 based on the step width reported from step width control section 202 (ST2540). The converted step width is adapted to the step width used by addition section 134. The step width before conversion is the same as the step width used for quantization by quantization section 191, that is, SSb shown in FIG.6B. The converted step width is SSa shown in FIG. 6C. After step ST2540, the flow proceeds to step ST1580 described in Embodiment 1. When no quantization error occurs in bit conversion section 133, the converted step width does not always have to be SSa shown in FIG.6C.

According to this embodiment, the step width of quantization of the difference value between the first SNR value and the second SNR value--the difference SNR value--is associated with the relative size of the second SNR value with respect to the average SNR value in the reception apparatus. It is thereby possible to set a minimum step width according to the dynamic range, and in addition generate the CSI frame without adding information relating to the setting as side information even when a plurality of different step widths is set for a plurality of different difference SNR values, so that it is possible to maintain the quality of the feedback information and reduce the amount of data in the feedback information.

According to this embodiment, the step width of quantization of the difference value between the first SNR value and the second SNR value--the difference SNR value--is associated with the relative size of the second SNR value with respect to the average SNR value in the transmission apparatus. It is thereby possible to set a minimum step width according to the dynamic range, and in addition, restore the CSI frame without referring to the information relating to the setting as side information even when a plurality of different step widths is set for a plurality of different difference SNR values, so that it is possible to maintain the quality of the feedback information and reduce the amount of data in the feedback information.

When step width control section 201 described in this embodiment is provided to CSI frame generation section 166 described in Embodiment 1, and step width control section 202 described in this embodiment is provided to CSI frame processing section 110 described in Embodiment 1, both or either one of the number of bits for encoding and the step width for quantization can be variably set.

(Embodiment 3)

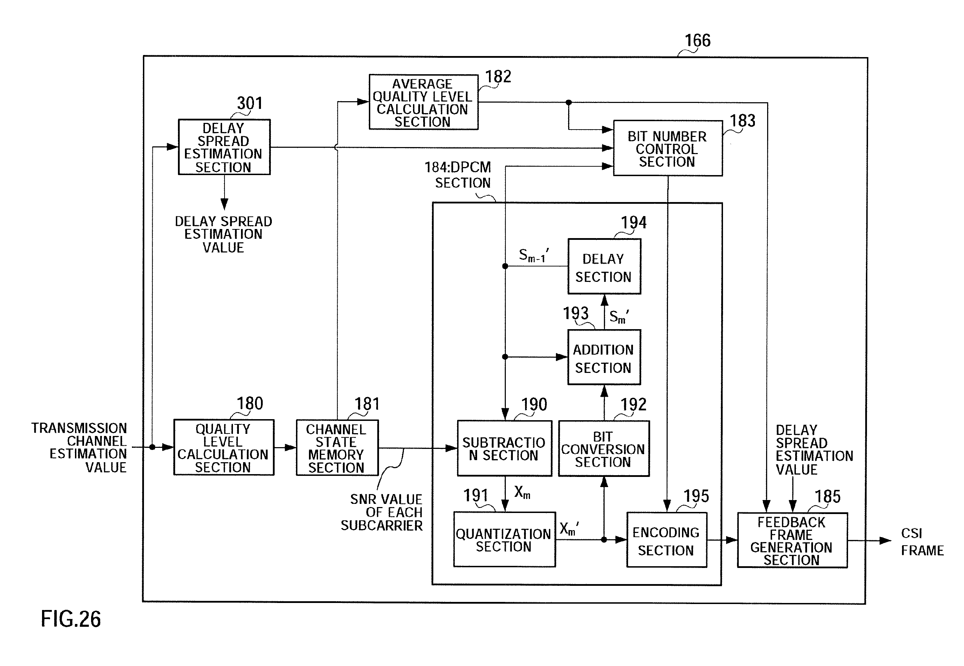

FIG.26 is a block diagram showing the configuration of CSI frame generation section 166 provided to the reception apparatus according to Embodiment 3 of the present invention. The reception apparatus of this embodiment has the same basic configuration as reception apparatus 150 described in Embodiment 1. Therefore, components that are the same as or similar to those described in Embodiment 1 will be assigned the same reference numerals. The difference between this embodiment and Embodiment will be mainly described in the following.

CSI frame generation section 166 shown in FIG.26 is furthermore provided with delay spread estimation section 301.

Delay spread estimation section 301 estimates the delay spread of a transmission channel using a transmission channel response estimation value obtained by transmission channel response estimation section 165. The delay spread estimation value is obtained as a result of this estimation. The delay spread estimation value is outputted to bit number control section 183 and feedback frame generation section 185.

Accordingly, bit number control section 183 of this embodiment sets the number of bits as described in Embodiment 1 also based on the delay spread estimation value. Feedback frame generation section 185 of this embodiment also performs the CSI frame generation described in Embodiment 1 based on the delay spread estimation value.

The operation performed in CSI frame generation section 166 will next be described.

Delay spread estimation section 301 calculates the delay spread estimation value of the transmission channel using the transmission channel response estimation value, which is the frequency response value of the transmission channel calculated by transmission channel response estimation section 165.

The method of estimating the delay spread of the transmission channel response is not particularly limited, and examples thereof will be described below.

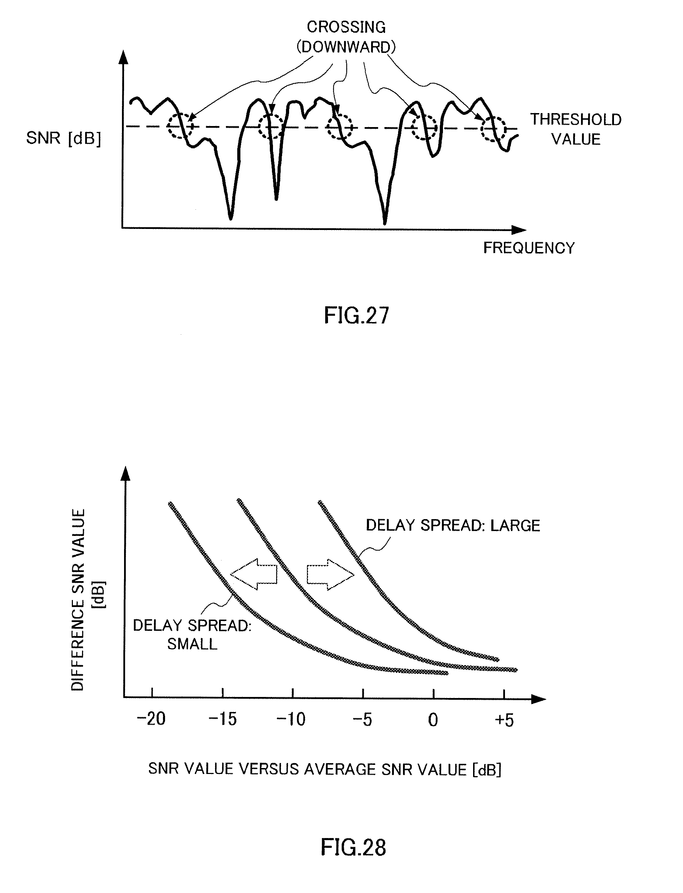

For example, as shown in FIG.27, a given threshold value is set for the SNR characteristics (or amplitude characteristics) of the frequency response of the transmission channel. The severity of fluctuation per unit frequency is detected from the number of times the threshold value is crossed from top down (hereinafter referred to as "the number of level crossing times"). When the number of level crossing times is large, the transmission channel response has a low frequency correlation, that is, the correlation between adjacent subcarriers is low. On the other hand, the correlation between adjacent subcarriers is high when the number of level crossing times is small. Accordingly, as shown in FIG. 28, there is a relationship that the frequency correlation is low (that is, the difference SNR value is large) when the delay spread is large, and the frequency correlation is high (that is, the SNR value is small) when the delay spread is small, so that it is possible to estimate the size of the delay spread from the number of level crossing times.

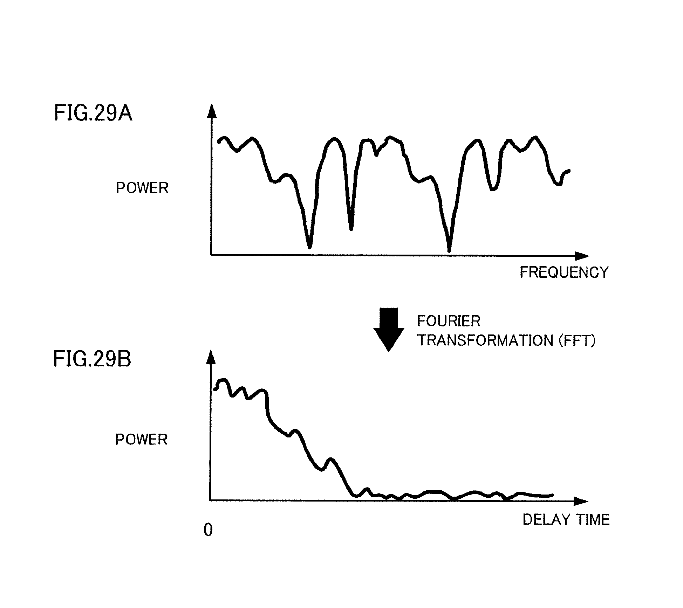

In another example as shown in FIGs.29A and 29B, the impulse response of the transmission channel can be obtained by converting the frequency response of the transmission channel (FIG.29A) to a time domain (FIG.29B) through Fourier transform. The delay spread may be calculated from the obtained impulse response. Alternatively, the delay spread may be calculated from the delay profile obtained by averaging the impulse response over time. The delay spread can be estimated with greater accuracy using the time-averaged delay profile providing that the delay profile is in the range where the propagation environment does not substantially change.

In the example shown in FIGs.29A and 29B, the delay profile is calculated using the method of estimating the frequency response, but the method of generating the delay profile is not limited to this. For example, an impulse response may be calculated directly in a time domain using a reception result such as a pilot signal.

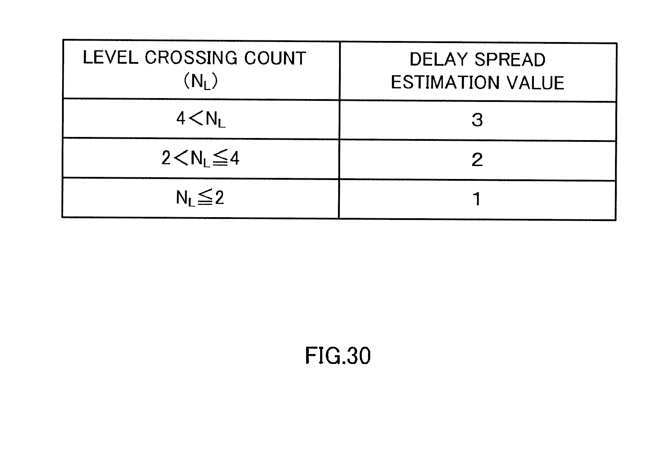

Delay spread estimation section 301 acquires a delay spread estimation value corresponding to detected number of level crossing times $N_L$ referring to a table such as the one shown, for example, in FIG.30. The acquired delay spread estimation value is then outputted to bit number control section 183.

Bit number control section 183 increases the number of bits in accordance with an increase in the delay spread estimation value, and reduces the number of bits in accordance with a decrease in the delay spread estimation value.

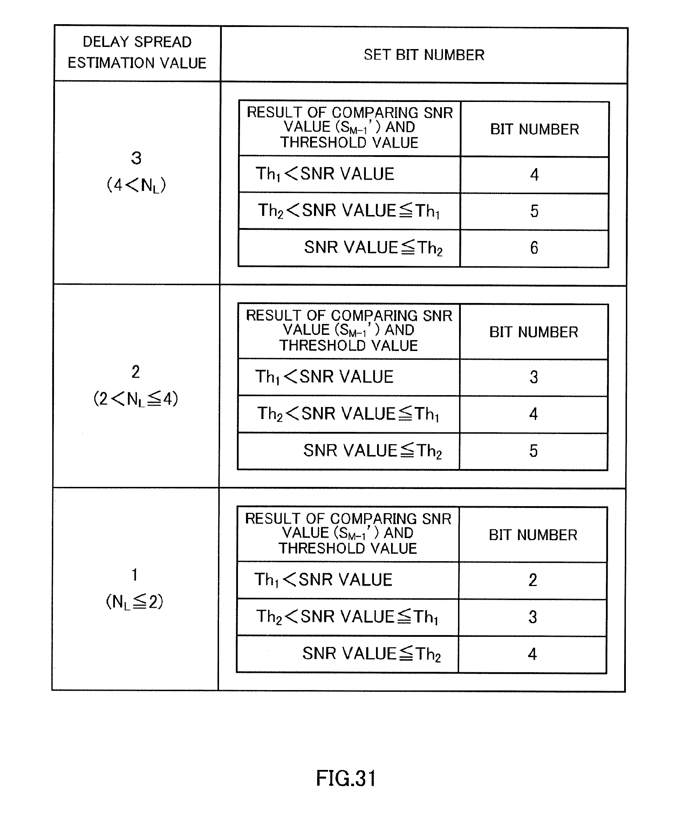

Specifically, bit number control section 183 switches the setting value of the table according to the size of the delay spread estimation value inputted from delay spread estimation section 301. More specifically, as shown in FIG. 31, a table corresponding to the inputted delay spread estimation value is selected.

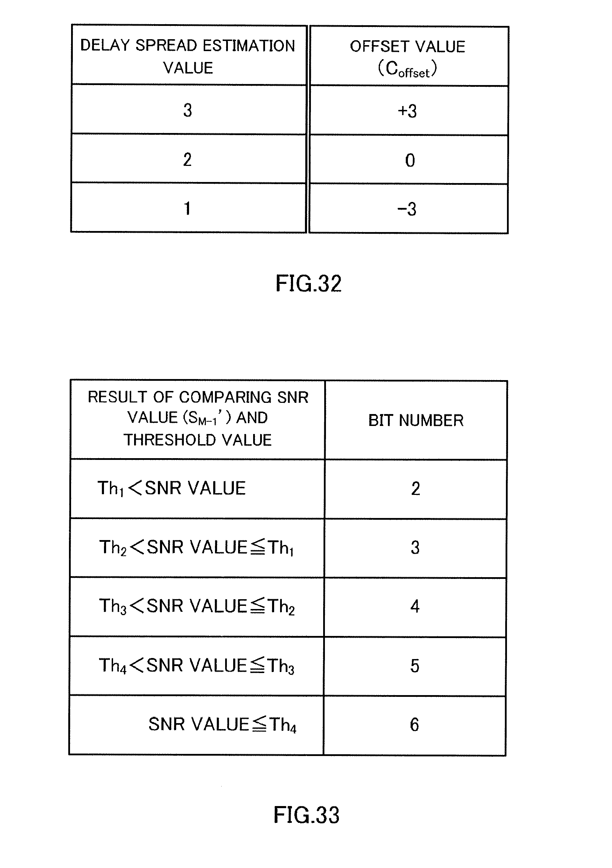

The control method from delay spread estimation to table selection is not limited to the above-described methods. For example, for the number of level crossing times $N_L$ outputted from delay spread estimation section 301, bit number control section 183 selects offset value $C_{offset}$ used to calculate the reference value (threshold value) from the table shown in FIG.32, for example. Threshold values $Th_1$, $Th_2$, $Th_3$ and $Th_4$ are then calculated by substituting the selected offset value $C_{offset}$ into the following equations 4 through 7, for example. In this case, the table shown, for example, in FIG.33 is used to set the variable number of bits.

$$Th_1 = \text{average SNR value} + 5 + C_{offset} \quad (\text{Equation } 4)$$

$$Th_2 = \text{average SNR value} + C_{offset} \quad (\text{Equation } 5)$$

$$Th_3 = \text{average SNR value} - 5 + C_{offset} \quad (\text{Equation } 6)$$

$$Th_4 = \text{average SNR value} - 10 + C_{offset} \quad (\text{Equation } 7)$$

Another control method may also be used. For example, the number of bits set for difference SNR value $X_m{}'$ of the $m^{th}$ subcarrier $f_m$ may be calculated using a function which takes the average SNR value, the SNR value $S_{m-1}{}'$ and the delay spread estimation value as arguments.

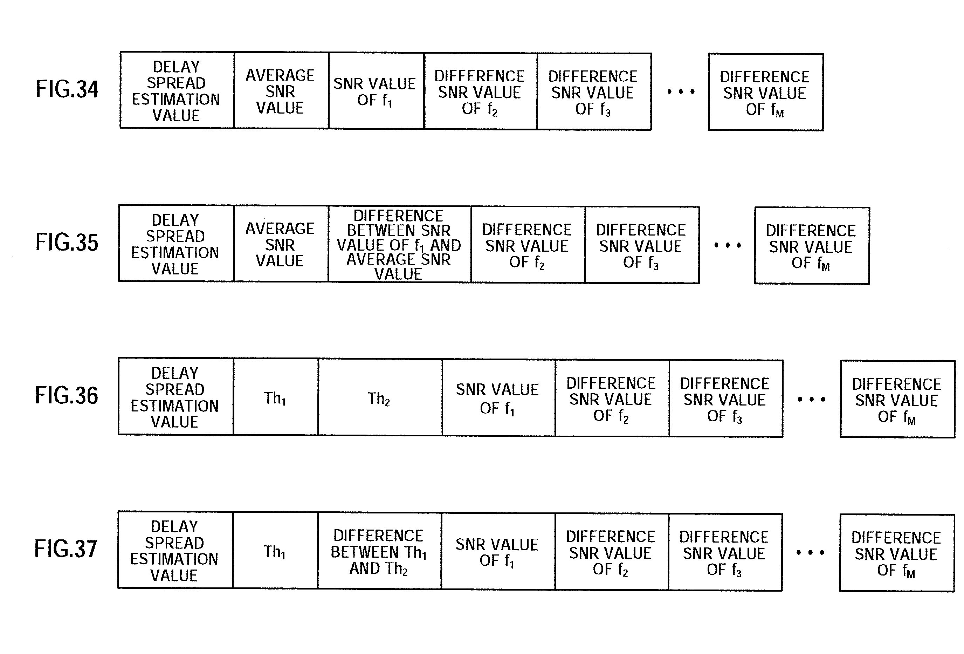

Feedback frame generation section 185 generates a CSI frame in a format as shown, for example, in FIGs . 34, 35, 36 and 37. The CSI frame shown in FIG.34 has the same format as the CSI frame shown in FIG.13, but the delay spread estimation value is arranged at the beginning of the frame. The CSI frame shown in FIG.35 has the same format as the CSI frame shown in FIG.14, but the delay spread estimation value is arranged at the beginning of the frame. The CSI frame shown in FIG.36 has the same format as the CSI frame shown in FIG.15, but the delay spread estimation value is arranged at the beginning of the frame. The CSI frame shown in FIG.37 has the same format as the CSI frame shown in FIG.16, but the delay spread estimation value is arranged at the beginning of the frame. The delay spread estimation value may also be arranged in a position other than the beginning of the CSI frame. An arbitrary frame format may be adopted providing that the frame format has the arrangement order specified in common between transmission and reception.

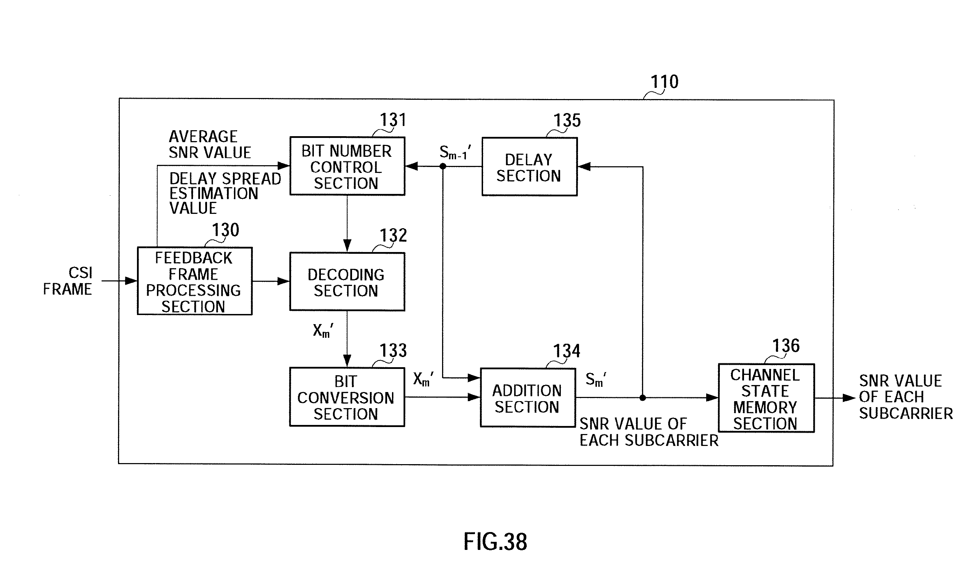

CSI frame processing section 110 provided to the transmission apparatus according to this embodiment will next be described using FIG.38. The transmission apparatus of this embodiment has the same basic configuration as transmission apparatus 100 described in Embodiment 1. Therefore, components that are the same as or similar to those described in Embodiment 1 will be assigned the same reference numerals. The difference between this embodiment and Embodiment 1 will be mainly described in the following.

In CSI frame processing section 110 shown in FIG.38, feedback frame processing section 130 extracts the delay spread estimation value as well as the average SNR value from the inputted CSI frame, and outputs the average SNR value and delay spread estimation value to bit number control section 131. The other portion of the CSI frame is outputted to decoding section 132 in the same way as in Embodiment 1.

Bit number control section 131 of this embodiment sets the number of bits as described in Embodiment 1 also based on the delay spread estimation value. The specific operation for setting the variable number of bits is the same as that of bit number control section 183 of CSI frame generation section 166.

In this way, according to this embodiment, even under a propagation environment where the delay spread fluctuates over time, it is possible to minimize errors that occur due to saturation when the allocated number of bits is inadequate.

(Embodiment 4)

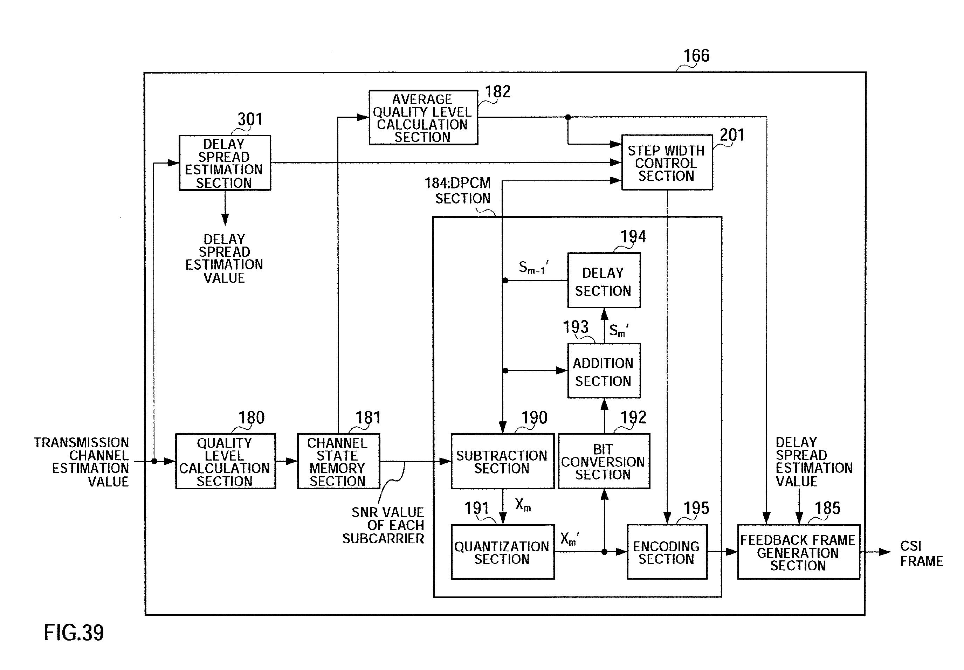

FIG.39 is a block diagram showing the configuration of CSI frame generation section 166 provided to the reception apparatus according to Embodiment 4 of the present invention. The reception apparatus of this embodiment has the same basic configuration as the reception apparatus described in Embodiment 1. CSI frame generation section 166 of this embodiment also has the same basic configuration as CSI frame generation section 166 described in Embodiment 2. Therefore, components that are the same as or similar to those described in the above-described embodiments will be assigned the same reference numerals. The difference between this embodiment and Embodiment 2 will be mainly described in the following.

CSI frame generation section 166 shown in FIG.39 also has the same delay spread estimation section 301 as the one described in Embodiment 3.

Accordingly, step width control section 201 of this embodiment also sets the step width as described in Embodiment 2 also based on the delay spread estimation value inputted from delay spread estimation section 301. In other words, step width control section 201 expands the step width in accordance with an increase in the delay spread estimation value, and narrows the step width in accordance with a decrease in the delay spread estimation value.

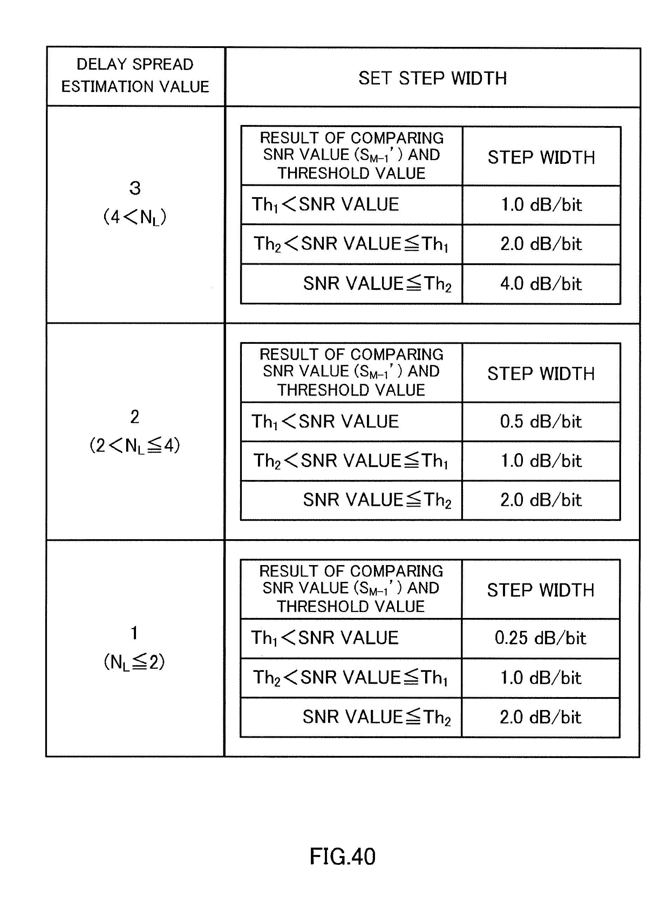

Specifically, step width control section 201 switches the setting value of the table according to the size of the delay spread estimation value inputted from delay spread estimation section 301. More specifically, as shown in FIG. 40, a table corresponding to the inputted delay spread estimation value is selected.

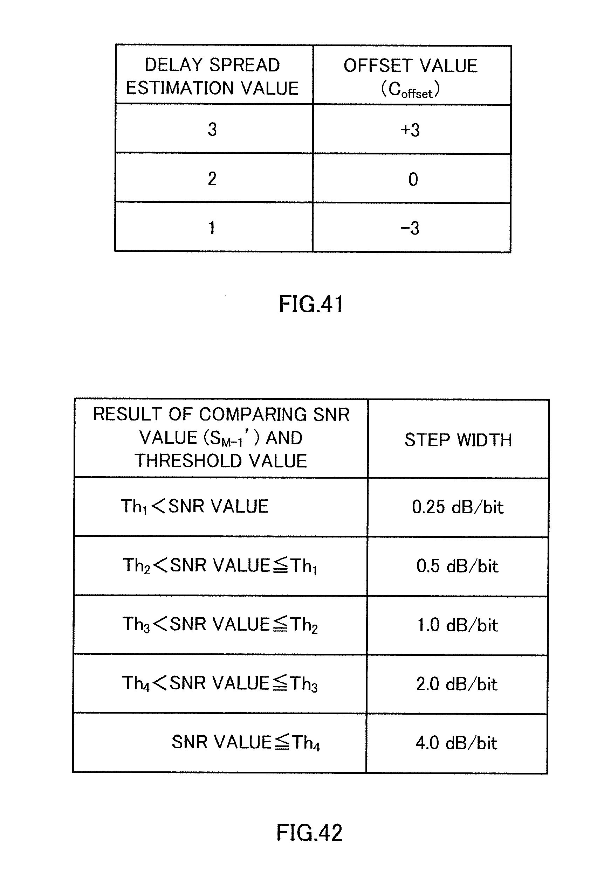

The control method from delay spread estimation to table selection is not limited to the above-described methods. For example, for the number of level crossing times $N_L$ outputted from delay spread estimation section 301, step width control section 201 selects offset value $C_{offset}$ used to calculate the reference value (threshold value) from the table shown in FIG.41, for example. Threshold values $Th_1$, $Th_2$, $Th_3$ and $Th_4$ are then calculated by substituting the selected offset value $C_{offset}$ into equations 4 through 7, for example. In this case, the table shown, for example, in FIG.42 is used to set the variable step width.

Another control method may also be used. For example, the step width set for difference SNR value $X_m'$ of the $m^{th}$ subcarrier $f_m$ may be calculated using a function which takes the average SNR value, SNR value $S_{m-1}'$ and the delay spread estimation value as arguments.

Feedback frame generation section 185 of this embodiment also uses the delay spread estimation value for the CSI frame generation described in Embodiment 1, as described in Embodiment 3.

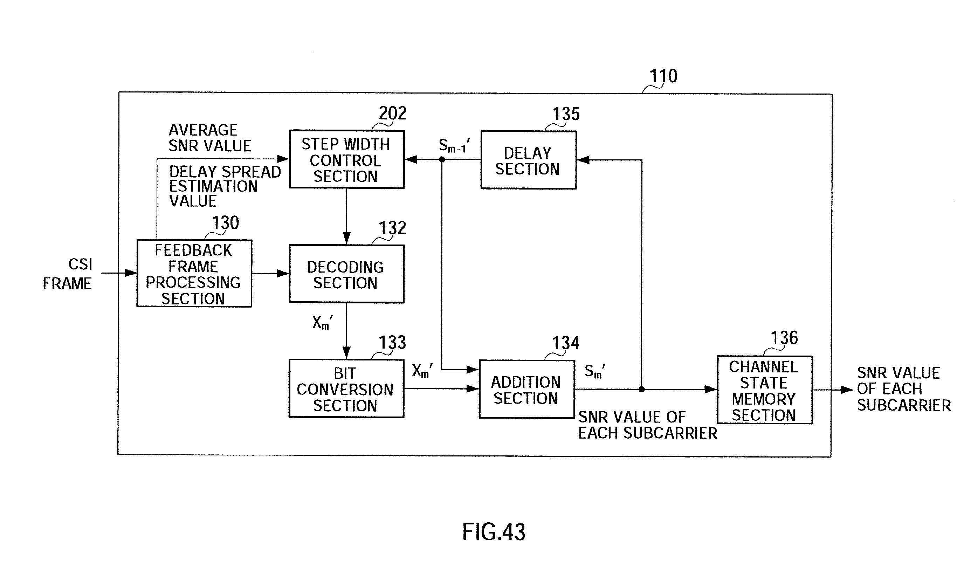

CSI frame processing section 110 provided to the transmission apparatus according to this embodiment will next be described using FIG.43. The transmission apparatus of this embodiment has the same basic configuration as transmission apparatus 100 described in Embodiment 1 . CSI frame processing section 110 of this embodiment also has the same basic configuration as CSI frame processing section 110 described in Embodiment 2. Therefore, components that are the same as or similar to those described in the above-described embodiments will be assigned the same reference numerals. The difference between this embodiment and Embodiment 2 will be mainly described in the following.

In CSI frame processing section 110 shown in FIG.43, feedback frame processing section 130 extracts the delay spread estimation value as well as the average SNR value from the inputted CSI frame, and outputs the average SNR value and delay spread estimation value to step width control section 202. The other portion of the CSI frame is outputted to decoding section 132 in the same way as in Embodiment 1.

Accordingly, step width control section 202 of this embodiment sets the step width as described in Embodiment 2 also based on the delay spread estimation value. The specific operation for setting the variable step width is the same as that of step width control section 201 of CSI frame generation section 166.

In this way, according to this embodiment, even under a propagation environment where the delay spread fluctuates over time, it is possible to reduce errors due to saturation such as slope addition distortion and errors due to quantization noise such as granular noise occurring when the set step width is too large.

When step width control section 201 described in this embodiment is provided to CSI frame generation section 166 described in Embodiment 3, and step width control section 202 described in this embodiment is provided to CSI frame processing section 110 described in Embodiment 3, it is possible to variably set both or either one of the number of bits for encoding and the step width for quantization.

In the above embodiments, the case has been described as an example where the present invention is implemented with hardware, the present invention can be implemented with software.

Furthermore, each function block used to explain the above-described embodiments is typically implemented as an LSI constituted by an integrated circuit. These may be individual chips or may partially or totally contained on a single chip.

Here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semi conductor technology or a derivative other technology, it is naturally also possible to carry out function block integration using this technology. Application in biotechnology is also possible.

The present application is based on Japanese Patent Application No.2004-346512, filed on November 30, 2004, the entire content of which is expressly incorporated by reference herein.

Industrial Applicability

The transmission control frame generation apparatus, the transmission control frame processing apparatus, the transmission control frame generation method and the transmission control frame processing method of the present invention may be used in a base station apparatus, communication terminal apparatus, or the like in a mobile communication system of a multicarrier transmission scheme.

**Claims**

1. A transmission control frame generation apparatus comprising:

   a reference level calculation section that calculates a reference channel state level among a plurality of subcarriers from a plurality of channel state levels that respectively correspond to the plurality of subcarriers;
   an encoding section that encodes a difference value between a first channel state level and a second channel state level that correspond to one subcarrier and another subcarrier, respectively, out of the plurality of subcarriers, and obtains an encoded difference value;
   a generation section that generates a frame indicating the reference channel state level and the encoded difference value; and
   an encoding control section that controls the encoding of the difference value based on a relative size of either one of the first channel state level and the second channel state level with respect to the reference channel state level.

2. The transmission control frame generation apparatus according to claim 1, wherein the encoding section encodes a difference value between the first channel state level and the second channel state level corresponding to a subcarrier adjacent to the one subcarrier.

3. The transmission control frame generation apparatus according to claim 2, wherein the encoding control section variably sets the number of bits of encoding.

4. The transmission control frame generation apparatus according to claim 3, wherein the encoding control section reduces the number of bits in accordance with an increase in the relative size, and increases the number of bits in accordance with a decrease in the relative size.

5. The transmission control frame generation apparatus according to claim 4, wherein the encoding control section increases the number of bits in accordance with an increase in delay spread of a transmission channel response, and reduces the number of bits in accordance with a decrease in the delay spread.

6. The transmission control frame generation apparatus according to claim 2, wherein:

   the encoding section quantizes the difference value; and
   the encoding control section variably sets a step width of the quantization.

**7.** The transmission control frame generation apparatus according to claim 6, wherein the encoding control section narrows the step width in accordance with an increase in the relative size, and expands the step width in accordance with a decrease in the relative size.

**8.** The transmission control frame generation apparatus according to claim 7, wherein the encoding control section expands the step width in accordance with an increase in delay spread of a transmission channel response, and narrows the step width in accordance with a decrease in the delay spread.

**9.** The transmission control frame generation apparatus according to claim 2, wherein the reference level calculation section calculates an average value of the plurality of channel state levels as the reference channel state level.

**10.** The transmission control frame generation apparatus according to claim 2, wherein the reference level calculation section calculates the reference channel state level using a function of the average value of the plurality of channel state levels.

**11.** A transmission control frame processing apparatus comprising:

an acquisition section that acquires a frame indicating a reference channel state level among a plurality of subcarriers, and further indicating a difference value between a first channel state level and a second channel state level that correspond to one subcarrier and another subcarrier, respectively, out of the plurality of subcarriers;
a decoding section that decodes the difference value and obtains a decoded difference value;
an individual level calculation section that calculates either one of the first channel state level and the second channel state level using the decoded difference value; and
a decoding control section that controls the decoding of the difference value based on a relative size of either one of the first channel state level and the second channel state level with respect to the reference channel state level.

**12.** The transmission control frame processing apparatus according to claim 11, wherein the acquisition section acquires a frame indicating a difference value between the first channel state level and the second channel state level corresponding to a subcarrier adjacent to the one subcarrier.

**13.** The transmission control frame processing apparatus according to claim 12, wherein the decoding control section variably sets the number of bits of the difference value subjected to decoding.

**14.** The transmission control frame processing apparatus according to claim 13, wherein the decoding control section reduces the number of bits in accordance with an increase in the relative size, and increases the number of bits in accordance with a decrease in the relative size.

**15.** The transmission control frame processing apparatus according to claim 14, wherein the decoding control section increases the number of bits in accordance with an increase in delay spread of a transmission channel response, and increases the number of bits in accordance with a decrease in the delay spread.

**16.** The transmission control frame processing apparatus according to claim 12, wherein:

the decoding section performs step width conversion for the decoded difference value; and
the decoding control section variably sets a step width of the decoded difference value subjected to the conversion.

**17.** The transmission control frame processing apparatus according to claim 16, wherein the decoding control section narrows the step width in accordance with an increase in the relative size, and expands the step width in accordance with a decrease in the relative size.

**18.** The transmission control frame processing apparatus according to claim 17, wherein the decoding control section expands the step width in accordance with an increase in delay spread of a transmission channel response, and narrows the step width in accordance with a decrease in the delay spread.

**19.** The transmission control frame processing apparatus according to claim 12, wherein the acquisition section acquires an average value of the plurality of channel state levels as the reference channel state level.

20. The transmission control frame processing apparatus according to claim 12, wherein the acquisition section acquires the reference channel state level calculated using a function of the average value of the plurality of channel state levels.

21. A transmission control frame generation method comprising:

a reference level calculation step of calculating a reference channel state level among a plurality of subcarriers from a plurality of channel state levels that respectively correspond to the plurality of subcarriers;
an encoding step of encoding a difference value between a first channel state level and a second channel state level that correspond to one subcarrier and another subcarrier, respectively, out of the plurality of subcarriers, and obtaining an encoded difference value;
a generation step of generating a frame indicating the reference channel state level and the encoded difference value; and
an encoding control step of controlling the encoding of the difference value based on a relative size of either one of the first channel state level and the second channel state level with respect to the reference channel state level.

22. A transmission control frame processing method comprising:

an acquisition step of acquiring a frame indicating a reference channel state level among a plurality of subcarriers, and further indicating a difference value between a first channel state level and a second channel state level that correspond to one subcarrier and another subcarrier, respectively, out of the plurality of subcarriers;
a decoding step of decoding the difference value and obtaining a decoded difference value;
an individual level calculation step of calculating either one of the first channel state level and the second channel state level using the decoded difference value; and
a decoding control step of controlling the decoding of the difference value based on a relative size of either one of the first channel state level and the second channel state level with respect to the reference channel state level.

FIG.1

FIG.2

FIG.3

START

ST1010
INITIALIZE STATE VALUE
OF DELAY SECTION m = 1

ST1020
CALCULATE SNR VALUE
OF EACH SUBCARRIER

ST1030
CALCULATE AVERAGE
SNR VALUE

ST1040
$X_m = S_m - S_{m-1}'$

ST1050
QUANTIZE $X_m$, OUTPUT
QUANTIZATION RESULT $X_m'$

ST1060
CONVERT STEP WIDTH OF
QUANTIZATION RESULT $X_m'$

ST1070
$S_m' = S_{m-1}' + X_m'$

ST1080
UPDATE STATE VALUE OF
DELAY SECTION TO $S_m'$

ST1090
NO ← m=1? → YES

ST1110
ALLOCATE VARIABLE BIT
NUMBER TO DIFFERENCE
SNR VALUE $(X_m')$ OF
SUBCARRIER $f_m$

ST1100
ALLOCATE FIXED BIT
NUMBER TO SNR VALUE OF
SUBCARRIER $f_1$

ST1140
m=m+1

ST1120
ENCODE DIFFERENCE SNR
VALUE $(X_m')$ OF
SUBCARRIER $f_m$

ST1130
m>=M? → NO
YES

ST1150
GENERATE CSI FRAME

END

FIG.4

TRANSMISSION CHANNEL RESPONSE ESTIMATION CARRIER

DATA CARRIER

FIG.5A

FIG.5B

FIG.6A          FIG.6B          FIG.6C

| SC# | SNR VALUE |
|-----|-----------|
| $f_1$ | 40 |
| $f_2$ | 42 |
| $f_3$ | 41 |
| $f_4$ | 38 |
| $f_5$ | 33 |
| $f_6$ | 22 |
| $f_7$ | 22 |
| $f_8$ | 32 |
| $f_9$ | 35 |
| $f_{10}$ | 37 |

FIG.7

FIG.8

| SC# | DIFFERENCE SNR VALUE | REQUIRED BIT NUMBER | CODING RANGE |
|---|---|---|---|
| $f_1$ | --- | 6 bits | +31~-32 |
| $f_2$ | +2 | 3 bits | +3~-4 |
| $f_3$ | -1 | 2 bits | +1~-2 |
| $f_4$ | -3 | 3 bits | +3~-4 |
| $f_5$ | -5 | 4 bits | +7~-8 |
| $f_6$ | -11 | 5 bits | +15~-16 |
| $f_7$ | 0 | 1 bit | 0~-1 |
| $f_8$ | +10 | 5 bits | +15~-16 |
| $f_9$ | +3 | 4 bits | +7~-8 |
| $f_{10}$ | +2 | 3 bits | +3~-4 |

FIG.9

| RESULT OF COMPARING SNR VALUE ($S_{M-1}'$) AND THRESHOLD VALUE | NUMBER OF BITS |
|---|---|
| $Th_1 <$ SNR VALUE | 3 bits |
| $Th_2 <$ SNR VALUE $\leq Th_1$ | 4 bits |
| SNR VALUE $\leq Th_2$ | 5 bits |

FIG.10

SNR VALUE VERSUS AVERAGE SNR VALUE
[dB]

FIG.11

| SC# | ALLOCATED BIT NUMBER |
|---|---|
| $f_1$ | 6 |
| $f_2$ | 4 |
| $f_3$ | 3 |
| $f_4$ | 3 |
| $f_5$ | 4 |
| $f_6$ | 5 |
| $f_7$ | 5 |
| $f_8$ | 5 |
| $f_9$ | 5 |
| $f_{10}$ | 4 |

FIG.12

**FIG.13**

| AVERAGE SNR VALUE | SNR VALUE OF $f_1$ | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|

**FIG.14**

| AVERAGE SNR VALUE | DIFFERENCE BETWEEN SNR VALUE OF $f_1$ AND AVERAGE SNR VALUE | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|

**FIG.15**

| $Th_1$ | $Th_2$ | SNR VALUE OF $f_1$ | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|---|

**FIG.16**

| $Th_1$ | DIFFERENCE BETWEEN $Th_1$ AND $Th_2$ | SNR VALUE OF $f_1$ | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|---|

| AVERAGE SNR VALUE 6 BITS | $f_1$ 6 BITS | $f_2$ 4 BITS | $f_3$ 3 BITS | $f_4$ 3 BITS | $f_5$ 4 BITS | $f_6$ 5 BITS | $f_7$ 5 BITS | $f_8$ 5 BITS | $f_9$ 5 BITS | $f_{10}$ 4 BITS |
|---|---|---|---|---|---|---|---|---|---|---|

FIG.17

FIG.18

START

ST1510
INITIALIZE STATE VALUE
OF DELAY SECTION m = 1

ST1520
EXTRACT AVERAGE SNR
VALUE OF CSI FRAME

ST1530
m=1?

YES — NO

ST1540
ALLOCATE FIXED BIT NUMBER
TO SNR VALUE
OF SUBCARRIER $f_1$

ST1550
ALLOCATE VARIABLE BIT
NUMBER DIFFERENCE SNR
VALUE ($X_m'$) OF
SUBCARRIER $f_m$

ST1620
m=m+1

ST1560
DECODE DIFFERENCE SNR VALUE ($X_m'$)
OF SUBCARRIER $f_m$

ST1570
CONVERT QUANTIZATION RESULT $X_m'$ TO
STEP WIDTH OF ADDITION SECTION

ST1580
$$S_m' = S_{m-1}' + X_m'$$

ST1590
UPDATE STATE VALUE OF
DELAY SECTION TO $S_m'$

ST1600
RETAIN $S_m'$

ST1610
NO — m>=M?

YES

END

FIG.19

FIG.20

START

ST1010
INITIALIZE STATE VALUE
OF DELAY SECTION m = 1

ST1020
CALCULATE SNR VALUE
OF EACH SUBCARRIER

ST1030
CALCULATE AVERAGE
SNR VALUE

ST1040
$X_m = S_m - S_{m-1}'$

ST2010
m=1?

NO

ST1140
m=m+1

ST2030
SET STEP WIDTH
OF AVERAGE SNR VALUE
$(X_m')$ OF SUBCARRIER $f_m$

YES

ST2020
OUTPUT STEP WIDTH OF
SNR VALUE OF
SUBCARRIER $f_1$

ST2040
QUANTIZE DIFFERENCE SNR
VALUE $X_m$ OF SUBCARRIER
$f_m$ AND OUTPUT
QUANTIZATION RESULT $X_m'$

ST1070
$S_m' = S_{m-1}' + X_m'$

ST1080
UPDATE STATE VALUE OF
DELAY SECTION TO $S_m'$

ST2050
CONVERT STEP WIDTH
OF DIFFERENCE
SNR VALUE $X_m'$

ST2060
ENCODE DIFFERENCE
SNR VALUE$(X_m')$OF
SUBCARRIER $f_m$

ST1130
m>=M?

NO

YES

ST1150
GENERATE CSI FRAME

END

FIG.21

| RESULT OF COMPARING SNR VALUE ($S_{M-1}{}'$) AND THRESHOLD VALUE | STEP WIDTH | RANGE THAT CAN BE ENCODED IN 4 BITS |
|---|---|---|
| $Th_1 <$ SNR VALUE | 0.5 dB/bit | +3.5~-4.0 dB |
| $Th_2 <$ SNR VALUE $\leqq Th_1$ | 1.0 dB/bit | +7.0~-8.0 dB |
| SNR VALUE $\leqq Th_2$ | 2.0 dB/bit | +14.0~-16.0 dB |

FIG.22

| SC# | SNR VALUE [dB] | DIFFERENCE SNR VALUE [dB] | REQUIRED BIT NUMBER | ALLOCATED BIT NUMBER | SET STEP WIDTH | RANGE THAT CAN BE ENCODED IN 4 BITS |
|---|---|---|---|---|---|---|
| $f_1$ | 40 | --- | 6 | 6 | 1dB/bit | 1dB/bit |
| $f_2$ | 42 | +2 | 3 | 4 | 1dB/bit | +3.5∼-4.0 dB |
| $f_3$ | 41 | -1 | 2 | 4 | 0.5dB/bit | +3.5∼-4.0 dB |
| $f_4$ | 38 | -3 | 3 | 4 | 0.5dB/bit | +3.5∼-4.0 dB |
| $f_5$ | 33 | -5 | 4 | 4 | 1 dB/bit | +7.0∼-8.0 dB |
| $f_6$ | 22 | -11 | 5 | 4 | 2 dB/bit | +14.0∼-16.0 dB |
| $f_7$ | 22 | 0 | 1 | 4 | 2 dB/bit | +14.0∼-16.0 dB |
| $f_8$ | 32 | +10 | 5 | 4 | 2 dB/bit | +14.0∼-16.0 dB |
| $f_9$ | 35 | +3 | 4 | 4 | 2 dB/bit | +14.0∼-16.0 dB |
| $f_{10}$ | 37 | +2 | 3 | 4 | 1 dB/bit | +7.0∼-8.0 dB |

FIG.23

EP 1 816 772 A1

EP 1 816 772 A1

FIG.24

START

ST1510
INITIALIZE STATE VALUE
OF DELAY SECTION m = 1

ST1520
EXTRACT AVERAGE SNR
VALUE OF CSI FRAME

ST1530
m=1? — NO

YES

ST2510
SET STEP WIDTH OF SNR
VALUE OF SUBCARRIER $f_1$

ST2520
SET STEP WIDTH
OF DIFFERENCE SNR VALUE
$(X_m')$ OF SUBCARRIER $f_m$

ST1620
m=m+1

ST2530
DECODE DIFFERENCE SNR
VALUE $(X_m')$ OF SUBCARRIER $f_m$

ST2540
CONVERT QUANTIZATION RESULT $X_m'$ TO
STEP WIDTH OF ADDITION SECTION

ST1580
$$S_m' = S_{m-1}' + X_m'$$

ST1590
UPDATE STATE VALUE OF
DELAY SECTION TO $S_M'$

ST1600
RETAIN $S_m'$

ST1610
NO — m>=M?

YES

END

FIG.25

38

FIG.26

CROSSING
(DOWNWARD)

SNR [dB]

THRESHOLD
VALUE

FREQUENCY

FIG.27

DIFFERENCE SNR VALUE
[dB]

DELAY SPREAD: LARGE

DELAY SPREAD:
SMALL

-20    -15    -10    -5    0    +5

SNR VALUE VERSUS AVERAGE SNR VALUE [dB]

FIG.28

FIG.29A

POWER

FREQUENCY

FOURIER
TRANSFORMATION (FFT)

FIG.29B

POWER

0

DELAY TIME

| LEVEL CROSSING COUNT $(N_L)$ | DELAY SPREAD ESTIMATION VALUE |
|---|---|
| $4 < N_L$ | 3 |
| $2 < N_L \leqq 4$ | 2 |
| $N_L \leqq 2$ | 1 |

FIG.30

| DELAY SPREAD ESTIMATION VALUE | SET BIT NUMBER | |
|---|---|---|
| 3 (4 < N_L) | RESULT OF COMPARING SNR VALUE ($S_{M-1}'$) AND THRESHOLD VALUE | BIT NUMBER |
| | $Th_1 <$ SNR VALUE | 4 |
| | $Th_2 <$ SNR VALUE $\leqq Th_1$ | 5 |
| | SNR VALUE $\leqq Th_2$ | 6 |
| 2 (2 < N_L $\leqq$ 4) | RESULT OF COMPARING SNR VALUE ($S_{M-1}'$) AND THRESHOLD VALUE | BIT NUMBER |
| | $Th_1 <$ SNR VALUE | 3 |
| | $Th_2 <$ SNR VALUE $\leqq Th_1$ | 4 |
| | SNR VALUE $\leqq Th_2$ | 5 |
| 1 (N_L $\leqq$ 2) | RESULT OF COMPARING SNR VALUE ($S_{M-1}'$) AND THRESHOLD VALUE | BIT NUMBER |
| | $Th_1 <$ SNR VALUE | 2 |
| | $Th_2 <$ SNR VALUE $\leqq Th_1$ | 3 |
| | SNR VALUE $\leqq Th_2$ | 4 |

FIG.31

| DELAY SPREAD ESTIMATION VALUE | OFFSET VALUE $(C_{offset})$ |
|---|---|
| 3 | +3 |
| 2 | 0 |
| 1 | −3 |

FIG.32

| RESULT OF COMPARING SNR VALUE $(S_{M-1}')$ AND THRESHOLD VALUE | BIT NUMBER |
|---|---|
| $Th_1 <$ SNR VALUE | 2 |
| $Th_2 <$ SNR VALUE $\leqq Th_1$ | 3 |
| $Th_3 <$ SNR VALUE $\leqq Th_2$ | 4 |
| $Th_4 <$ SNR VALUE $\leqq Th_3$ | 5 |
| SNR VALUE $\leqq Th_4$ | 6 |

FIG.33

EP 1 816 772 A1

FIG.34

| DELAY SPREAD ESTIMATION VALUE | AVERAGE SNR VALUE | SNR VALUE OF $f_1$ | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|---|

FIG.35

| DELAY SPREAD ESTIMATION VALUE | AVERAGE SNR VALUE | DIFFERENCE BETWEEN SNR VALUE OF $f_1$ AND AVERAGE SNR VALUE | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|---|

FIG.36

| DELAY SPREAD ESTIMATION VALUE | $Th_1$ | $Th_2$ | SNR VALUE OF $f_1$ | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|---|---|

FIG.37

| DELAY SPREAD ESTIMATION VALUE | $Th_1$ | DIFFERENCE BETWEEN $Th_1$ AND $Th_2$ | SNR VALUE OF $f_1$ | DIFFERENCE SNR VALUE OF $f_2$ | DIFFERENCE SNR VALUE OF $f_3$ | $\cdots$ | DIFFERENCE SNR VALUE OF $f_M$ |
|---|---|---|---|---|---|---|---|

FIG.38

FIG.39

| DELAY SPREAD ESTIMATION VALUE | SET STEP WIDTH | |
|---|---|---|
| 3 $(4 < N_L)$ | RESULT OF COMPARING SNR VALUE $(S_{M-1}')$ AND THRESHOLD VALUE | STEP WIDTH |
| | $Th_1 < $ SNR VALUE | 1.0 dB/bit |
| | $Th_2 < $ SNR VALUE $\leqq Th_1$ | 2.0 dB/bit |
| | SNR VALUE $\leqq Th_2$ | 4.0 dB/bit |
| 2 $(2 < N_L \leqq 4)$ | RESULT OF COMPARING SNR VALUE $(S_{M-1}')$ AND THRESHOLD VALUE | STEP WIDTH |
| | $Th_1 < $ SNR VALUE | 0.5 dB/bit |
| | $Th_2 < $ SNR VALUE $\leqq Th_1$ | 1.0 dB/bit |
| | SNR VALUE $\leqq Th_2$ | 2.0 dB/bit |
| 1 $(N_L \leqq 2)$ | RESULT OF COMPARING SNR VALUE $(S_{M-1}')$ AND THRESHOLD VALUE | STEP WIDTH |
| | $Th_1 < $ SNR VALUE | 0.25 dB/bit |
| | $Th_2 < $ SNR VALUE $\leqq Th_1$ | 1.0 dB/bit |
| | SNR VALUE $\leqq Th_2$ | 2.0 dB/bit |

FIG.40

| DELAY SPREAD ESTIMATION VALUE | OFFSET VALUE ($C_{offset}$) |
|---|---|
| 3 | +3 |
| 2 | 0 |
| 1 | −3 |

FIG.41

| RESULT OF COMPARING SNR VALUE ($S_{M-1}'$) AND THRESHOLD VALUE | STEP WIDTH |
|---|---|
| $Th_1 < $ SNR VALUE | 0.25 dB/bit |
| $Th_2 < $ SNR VALUE $\leqq Th_1$ | 0.5 dB/bit |
| $Th_3 < $ SNR VALUE $\leqq Th_2$ | 1.0 dB/bit |
| $Th_4 < $ SNR VALUE $\leqq Th_3$ | 2.0 dB/bit |
| SNR VALUE $\leqq Th_4$ | 4.0 dB/bit |

FIG.42

FIG.43

**INTERNATIONAL SEARCH REPORT**

| International application No. |
| --- |
| PCT/JP2005/021799 |

**A. CLASSIFICATION OF SUBJECT MATTER**
*H04J11/00*(2006.01), *H04B7/26*(2006.01)

According to International Patent Classification (IPC) or to both national classification and IPC

**B. FIELDS SEARCHED**

Minimum documentation searched (classification system followed by classification symbols)
*H04J11/00*(2006.01), *H04B7/26*(2006.01)

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2003-152671 A (Nippon Terekomu Kabushiki Kaisha), 23 May, 2003 (23.05.03), Par. Nos. [0023], [0034] (Family: none) | 1-22 |
| A | JP 2004-242189 A (Nippon Telegraph And Telephone Corp.), 26 August, 2004 (26.08.04), Par. Nos. [0008] to [0012] (Family: none) | 1-22 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 20 February, 2006 (20.02.06) | Date of mailing of the international search report 28 February, 2006 (28.02.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/021799

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2002/103926 A1  (QUALCOMM INC.),<br>27 December, 2002 (27.12.02),<br>Page 44, lines 1 to 15; page 46, lines 7 to 20<br>& EP 1400035 A1          & KR 2004007723 A<br>& BR 200210417 A         & AU 2002310431 A1<br>& JP 2004-531976 A       & TW 583854 A<br>& CN 1582540 A | 1-22 |
| A | WO 2002/049305 A2  (BROADSTROM<br>TELECOMMUNICATIONS, INC.),<br>20 June, 2002 (20.06.02),<br>Page 18, lines 18 to 21<br>& JP 2005-502218 A       & JP 2004-529524 A<br>& JP 2004-537875 A       & US 2002/0119781 A1<br>& US 2002/0147017 A1     & US 2003/0169681 A1<br>& EP 1344365 A           & WO 2002/049305 A2<br>& WO 2002/049306 A2      & WO 2002/049385 A2<br>& AU 3662702 A           & CA 2431844 A<br>& AU 3258902 A           & AU 3521702 A<br>& CA 2431849 A           & CA 2431502 A<br>& CN 1481633 A           & CN 1484906 A<br>& CN 1524367 A | 1-22 |
| A | JP 2001-238269 A  (KDDI Corp.),<br>31 August, 2001 (31.08.01),<br>Full text; all drawings<br>& US 2001/0024427 A1     & US 6836484 B2 | 1-22 |
| A | JP 2003-169036 A  (Nippon Terekomu<br>Kabushiki Kaisha),<br>13 June, 2003 (13.06.03),<br>Figs. 12, 18<br>(Family: none) | 1-22 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004346512 A

### Non-patent literature cited in the description

- **HYNSOO CHEON ; BYUNGJOON PART ; DAESIK HONG.** Adaptive Multicarrier System with Reduced Feedback Information in Wideband Radio Channels. *Vehicular Technology Conference, 1999. VTC 1999-Fall, IEEE VTS 50,* 19 September 1999, vol. 5, 2880-2884

- **KAZUO TANAKA.** *Digital Information Compression <Fundamental Techniques of the INC/VANEra>,* 30 August 1984
- Information Source Coding; Distorted Data Compression. *Society of Information Theory and its Applications ed., Information Theory and its Applications Series 1-II,* 08 September 2000